# EUROPEAN PATENT SPECIFICATION

(11) **EP 3 163 863 B1**
(45) Date of publication and mention of the grant of the patent: **02.08.2023**
(21) Application number: 15811806.7
(22) Date of filing: 14.04.2015
(51) Int. Cl.: G09G 5/38, G09G 5/36, G09G 5/00, G03B 17/18, G03B 15/00, H04N 23/69

(54) **IMAGE DISPLAY DEVICE AND IMAGE DISPLAY METHOD**
BILDANZEIGEVORRICHTUNG UND BILDANZEIGEVERFAHREN
DISPOSITIF D'AFFICHAGE D'IMAGE ET PROCÉDÉ D'AFFICHAGE D'IMAGE

(30) Priority: 27.06.2014 JP 2014132703
(43) Date of publication of application: 03.05.2017
(73) Proprietor: FUJIFILM Corporation, Tokyo 106-8620 (JP)
(72) Inventor: ONO, Shuji, Tokyo 107-0052 (JP)
(74) Representative: Klunker IP Patentanwälte PartG mbB
(86) International application number: PCT/JP2015/061507
(87) International publication number: WO 2015/198692

(56) References cited:
- EP-A1- 2 592 618
- WO-A1-2013/073107
- JP-A- 2002 262 159
- JP-A- 2004 207 774
- JP-A- 2011 205 530
- JP-A- 2013 109 067
- US-A1- 2007 165 051
- US-A1- 2010 245 630
- US-A1- 2011 050 687
- US-A1- 2011 234 853
- US-A1- 2012 069 204

## Description

### BACKGROUND OF THE INVENTION

### 1. Field of the Invention

The present invention relates to an image display system and an image display method, and in particular, relates to a technology of displaying a plurality of images on a display unit.

### 2. Description of the Related Art

A device such as a finder of a camera, a monitoring camera, a television, a computer, and a portable terminal device includes a display in order to display various images and information items, and a user refers to display on the display, and thus, an imaged image is confirmed or the device is manipulated.

For example, in an imaging device disclosed in JP2013-109067A, "a synthesized photograph prepared by superimposing a second photograph (a standard lens imaging photograph) on a first photograph (a wide angle lens imaging photograph), and by superimposing a third photograph (a telephoto lens imaging photograph) on the second photograph" or "a synthesized photograph prepared by contracting and juxtapositioning the first photograph, the second photograph, and the third photograph" is displayed on a display device.

In addition, in an imaging device disclosed in JP2010-206643A, a video synthesized by inserting an image imaged in an imaging range on a telephoto side into an image imaged in an imaging range on a wide angle side is displayed on a display unit.

In addition, a head mount display device disclosed in JP2011-203446A, a part of a video which is imaged and acquired by using a wide angle lens is taken out as a main image, a video around the main image is taken out as a sub-image, and the main image is displayed on the front of eyes of a wearer and the sub-image is displayed around the main image.
US 2010/245630 A1 discloses an image display device having a display controller, wherein the display controller is adapted to display a first and a second image including an imaging subject. When the zoom lens of this device zooms from wide-angle side to telephoto side, the user is prevented from losing side of the subject E.g. a detail image is displayed on a display unit and an overall view of the detail scene is shown by a second image smaller than the detail image. The second image can be moved to any random position within the area of the screen of the display unit. Moreover, the size of a second image (the wide-angle image) can be varied as desired by the user.
US 2011/234853 A1 discloses an imaging apparatus having a display device in which images can be taken simultaneously as wide-angle images and telephoto images.

### SUMMARY OF THE INVENTION

As described above, a so-called "picture by picture (PBP)" in which a plurality of images are displayed on one display in parallel, and a so-called "picture in picture (PIP)" in which while one image is displayed on the entire display, the other image is superimposedly displayed on a part of the display as a small image, are known as a representative image display method.

However, in an image display method of the related art, it is difficult for a user to simultaneously and accurately grasp a plurality of images and information items displayed on a display.

For example, in an image display method of a "picture by picture", a display region of a display is divided into small regions, and each of a plurality of images is independently displayed in each of the small regions, and thus, a plurality of images (in particular, an image of a target object of each of the images (hereinafter, also referred to as a "display target image")) are arranged in positions exceeding a viewing range which is easily recognized by a user. For this reason, in a case where the user gazes a specific image in the plurality of images displayed on the display, it is difficult to simultaneously and accurately grasp the other image that the user does not gaze. Therefore, in the image display method of the "picture by picture", the user is required to sequentially recognize each image by moving a line of sight, and thus, the image display method of the "picture by picture" is inconvenient. In addition, in the image display method of the "picture by picture", each image is independently displayed in the small region, and thus, a display resolution at each image is reduced, it is not possible to finely display each image, and it is difficult to specifically present information of each image to the user, compared to a case where one image is displaced on the entire display region. Therefore, in the image display method of the "picture by picture" of the related art as disclosed in JP2013-109067A and JP2011-203446A, a plurality of images are not able to be displayed such that a general user is able to simultaneously and accurately grasp the contents of the plurality of images (in particular, an image of a target object).

In addition, in an imaging device of JP2013-109067A and an imaging device of JP2010-206643A in which an image display method of a "picture in picture" is adopted, a synthesized image is displayed on a display screen in a state where a telephoto image is superimposedly disposed on a wide angle image, and thus, the telephoto image blocks display of a part of the wide angle image on the display screen. As a result thereof, the telephoto image damages information of the wide angle image (in particular, information of a target object), and thus, it is possible for a user to confirm the image itself of the target object by referring to the telephoto image displayed on a display unit, but it is difficult for a user to accurately grasp an image around the target object from the telephoto image and the wide angle image displayed on the display screen. For this reason, in the image display method of the "picture in picture" of the related art as disclosed in JP2013-109067A and JP2010-206643A, it is not possible to display a plurality of images in order to enable the user to accurately grasp the position and the state of the target object in the entire image, or the state of the periphery of the target object.

The present invention has been made in consideration of the circumstances described above, and an object of the present invention is to provide a technology in which a plurality of images are displayed such that a user is able to easily grasp the contents without requiring a large movement in a line of sight and a plurality of images are displayed such that the user is able to suitably grasp a position and a state of an image of a target object (a display target image) in the entire image.

An aspect of the present invention relates to an image display system, comprising the features of claim 1.

According to this aspect, in the display unit, the first image and the second image are displayed while the position of the display target image is matched between the first image and the second image, in a state where the region in which the first image is displayed is set to be narrower than the region in which the second image is displayed. A user is able to easily grasp the first image and the second image (in particular, the display target image of the first image and the display target image of the second image) according to the display of the first image and the second image without requiring a large movement in a line of sight. In addition, the display target image is multilaterally displayed in the first image and the second image, and thus, the user is able to suitably grasp the position and the state of the display target image in the entire image.

Preferred embodiments are defined by the dependent claims. Advantageous effect of these will be outlined in the following.

A determination method of "the position of the display target image" is not particularly limited, and it is possible to indicate "the position of the display target image" of the first image and the second image according to one representative position or a plurality of positions indicating the arrangement of the display target image. For example, "the position of the display target image" of each of the first image and the second image may be determined on the basis of "a gravity center" having a shape defined according to an outer circumferential portion (an outline) of the display target image. Here, "the shape defined according to the outer circumferential portion (the outline) of the display target image" may be a shape approximately indicating the outer circumferential portion (the outline) of the display target image by a straight line or a curve. For example, "the shape defined according to the outer circumferential portion (the outline) of the display target image" may be approximately indicated by a polygonal shape, a circular shape, a shape formed by combining a polygonal shape and a circular shape, or other shapes.

A method of simultaneously displaying the first image and the second image on the display unit is not also particularly limited, and it is sufficient that the first image and the second image can be substantially simultaneously recognized from the viewpoint of the human eyesight observing the display of the display unit. Therefore, a display state of the first image and the second image may be continuously retained in the display unit, or a display state and a non-display state may be repeated in the display unit.

The first image and the second image displayed on the display unit include the display target image of the same target, and thus, the user is able to accurately grasp a position and a state of a target of the display target image in comprehensive consideration of the first image and the second image.

The user is able to suitably grasp the position and the state of the display target image from the wide angle image and the telephoto image which are displayed on the display unit, and for example, is able to confirm a relationship between the display target image and the periphery thereof from the wide angle image and to confirm specific information of the display target image from the telephoto image.

Furthermore, here "the wide angle image" and "the telephoto image" have a relative relationship, and for example, an image which is imaged and acquired by using an optical system having a relatively short focal point distance may be set to "the wide angle image", and an image which is imaged and acquired by using an optical system having a relatively long focal point distance may be set to "the telephoto image".

The first image may be displayed in the center portion of the image display region of the display unit with excellent visibility which is higher than that of the second image, and thus, the user is able to grasp the position and the state of the display target image of the first image by observing the center portion of the image display region of the display unit.

In addition, "the center portion" of the image display region of the display unit is a region including the center of the image display region. For example, "the gravity center" having a shape defined according to the outer circumferential portion (the outline) of the image display region of the display unit is regarded as "the center of the image display region", and a specific range based on the gravity center may be set to "the center portion" of the image display region herein. The planar shape of "the center portion" of the image display region is not particularly limited, and may be a circular shape, or may be a polygonal shape.

The second image may be displayed in the peripheral portion of the image display region of the display unit with excellent visibility which is identical to or higher than or equal to that of the first image, and thus, the user is able to grasp the position and the state of the display target image of the second image by observing the peripheral portion of the image display region of the display unit.

In addition, "the peripheral portion" of the image display region of the display unit is a region not including "the center portion" described above, and for example, a specific range based on the outer circumferential portion (the outline) of the image display region of the display unit may be set to "the peripheral portion" of the image display region herein.

The first image and the second image having different angles of view are displayed on the display unit, and thus, the user is able to grasp the position and the state of the display target image in comprehensive consideration of a plurality of images having different angles of view. Thereforesince the display target image of the first image and the display target image of the second image are images of the same target, the user is able to grasp a relationship between the display target image and the periphery thereof by observing the first image and to grasp specific information of the display target image by observing the second image.

Furthermore, "the display field angle" indicates an angle of view in a range displayed on the display unit, and for example, a wider range of an image of an object is displayed in the first image having a relatively large display field angle than in the second image having a relatively small display field angle.

The size of the display region of the first image in the display unit may be adaptively changed according to a relative size of the display target image of the first image and the second image.

The second image may not be displayed in the region in which the first image is displayed in the display unit, and thus, the user is able to confirm the first image in a state without being inhibited by the second image.

The first image and the second image may be mixedly displayed in at least a part of the region in which the first image is displayed in the display unit, and thus, the mixedly displayed region may be used as both of "the region in which the first image is displayed" and "the region in which the second image is displayed".

Here, "at least a part of the region in which the first image is displayed in the display unit" is not particularly limited, is preferably a region including a boundary region between the first image and the second image from the viewpoint of making display separation properties of the first image and the second image better, and for example, is preferably a region including the outer circumferential portion (the outline) of the region in which the first image is displayed.

The mixing ratio of the second image with respect to the first image may be continuously changed in the direction towards the peripheral portion from the center portion of the first image in at least a part of the region in which the first image is displayed in the display unit, and thus, the first image and the second image are displayed with a gradation.

The mixing ratio of the first image decreases, and the mixing ratio of the second image increases towards the peripheral portion from the center portion of the first image, and thus, it is possible to improve the visibility of the first image and the second image in the display unit.

Here, "the direction towards the peripheral portion from the center portion of the first image", for example, is indicated by a radical direction based on the center portion of the first image, and corresponds to a direction towards "the outer circumferential portion (the outline)" from "the gravity center" having a shape defined according to the outer circumferential portion (the outline) of the first image.

It is possible to adaptively change the display size of at least one of the first image or the second image in the display unit according to the position of the display target image of the first image and the position of the display target image of the second image.

Here, "the display size" may be on the basis of "the size of the display region in the display unit", or may be on the basis of "a size of a display magnification (a display magnification ratio or a display reduction ratio) of an image".

The display target image of the first image and the display target image of the second image may be displayed and arranged in different depth positions by the stereoscopic display, and thus, it is possible to improve visibility.

The first image and the second image which are electronically or optically synthesized may be displayed on the display unit.

It is possible to adaptively change the display ratio of at least one of the first image or the second image in the display unit according to the blur amount of at least one of the display target image of the first image or the display target image of the second image.

Here, "the blur amount" is not particularly limited insofar as the blur amount is data directly or indirectly indicating the size of the blur of at least one of the display target image of the first image or the display target image of the second image. For example, "the amount of the movement of the display target image" obtained by one or both of "blur (object blur) due to the movement of the object itself" and "blur due to the movement of an imaging device at the time of performing imaging" may be used as "the blur amount".

It is desirable that in a case in which the blur amount acquired by the blur acquisition unit is greater than or equal to a first threshold value, the display controller sets the display ratio of the first image to be larger than that in a case in which the blur amount acquired by the blur acquisition unit is less than the first threshold value.

According to this aspect, in a case where the blur amount is greater than or equal to the first threshold value, the display ratio of the first image increases, and thus, it is possible to improve the visibility of the first image.

In a case where the blur amount is less than or equal to the second threshold value, the display ratio of the second image increases, and thus, it is possible to improve the visibility of the second image.

It is possible to adaptively change the ratio of the display area to the entire image display region in the display unit according to the blur amount.

It is possible to adaptively change the mixing ratio of the display in at least a part of the region in which the first image is displayed in the display unit according to the blur amount.

It is possible to display the first image and the second image on the display unit without any parallax by imaging the first image and the second image in a common direction, and it is possible to improve the visibility of the first image and the second image (in particular, the display target image) which are displayed on the display unit.

Another aspect of the present invention relates to an image display method of controlling display of an image in a display image system as defined by any of claims 1 to 15.

According to the present invention, in the display unit, the first image and the second image are displayed while matching the position of the display target image between the first image and the second image, in a state where the region in which the first image is displayed is set to be narrower than the region in which the second image is displayed. For this reason, the user observing the display unit is able to easily grasp the first image and the second image (in particular, the display target image of the first image and the display target image of the second image) without requiring a large movement in a line of sight. In addition, the display target image is multilaterally displayed in the first image and the second image, and thus, the user is able to suitably grasp the position and the state of the display target image in the entire image.

### BRIEF DESCRIPTION OF THE DRAWINGS

Fig. 1 is a diagram illustrating an example of an appearance configuration of an image display system.
Fig. 2 is a block diagram illustrating an example of a functional configuration of the image display system.
Fig. 3 is a plan view illustrating an image display region of a display unit.
Fig. 4 is a diagram illustrating a first synthesized display example of a first image (a wide angle image) and a second image (a telephoto image).
Fig. 5 is a plan view of the display unit (the image display region) for illustrating a second synthesized display example of the first image (the wide angle image) and the second image (the telephoto image).
Fig. 6 is a diagram illustrating the second synthesized display example of the first image (the wide angle image) and the second image (the telephoto image).
Fig. 7 is a diagram illustrating viewing properties from the viewpoint of a visual function (visual power), an information-seeking motion, and an inducing effect.
Fig. 8 is a diagram illustrating a display example of the first image and the second image considering human visual characteristics.
Fig. 9 is a flowchart illustrating an example of an image display method.
Fig. 10 is a block diagram illustrating a functional configuration example of an image display system according to a first modification example.
Fig. 11 is a sectional view illustrating a configuration example of a first optical system, a second optical system, and an imaging element.
Fig. 12 is an enlarged view of a main part of a micro lens array and an image sensor.
Fig. 13 is a diagram illustrating a color filter array or the like which is disposed on the image sensor.
Fig. 14 is a diagram illustrating an appearance of a smart phone which is another embodiment of an imaging device.
Fig. 15 is a block diagram illustrating a configuration of the smart phone illustrated in Fig. 14.

### DESCRIPTION OF THE PREFERRED EMBODIMENTS

Hereinafter, embodiments of the present invention will be described with reference to the drawings.

In the following embodiments, an example will be described in which a wide angle image and a telephoto image are used as a first image and a second image which are displayed on a display unit, and other types of images may be used as the first image and the second image. In addition, the first image and the second image which are displayed on the display unit may be static images or motion pictures. The present invention is not limited to image display systems according to the following embodiments, and may be widely applied to various devices such as a camera, a television, a computer, and a portable terminal device which are capable of displaying a static image and/or a motion picture.

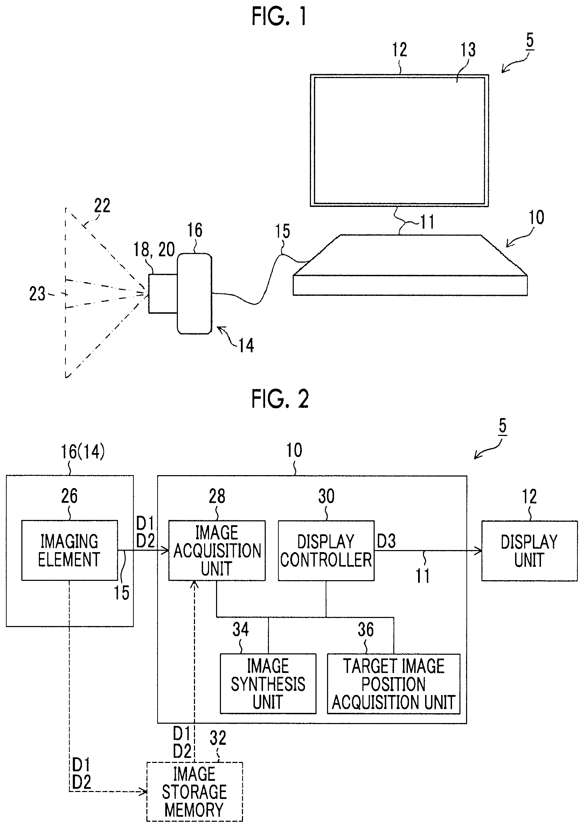

Fig. 1 is a diagram illustrating an example of an appearance configuration of an image display system 5. Fig. 2 is a block diagram illustrating an example of a functional configuration of the image display system 5.

The image display system 5 of this example includes an imaging device 14, an image display device 10 connected to a main body portion 16 of the imaging device 14 through an original image transmitting unit 15, and a display unit 12 connected to an image display device 10 through a display image transmitting unit 11.

A first optical system 18 used for imaging a wide angle image which is a first image and a second optical system 20 used for imaging a telephoto image which is a second image are attached to the main body portion 16 of the imaging device 14. An imaging element 26 mounted on the main body portion 16 receives wide angle image light 22 through the first optical system 18, receives telephoto image light 23 through the second optical system 20, and outputs first image data D1 indicating the received wide angle image (the first image) and second image data D2 indicating the received telephoto image (the second image).

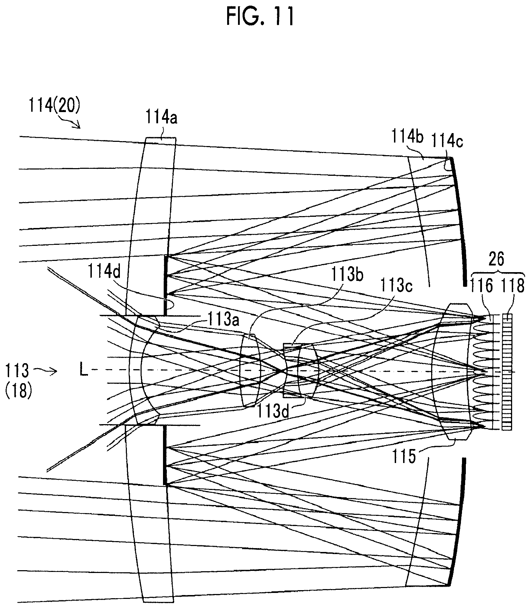

The configuration of the imaging device 14 including the first optical system 18 and the second optical system 20 is not particularly limited insofar as the imaging device 14 is capable of imaging a desired wide angle image and a desired telephoto image. For example, the imaging device 14 may be preferably configured by "an imaging system in which the first optical system 18 used for imaging the wide angle image (the first image) and the second optical system 20 used for imaging the telephoto image (the second image) have the same optical axis" as illustrated in Fig. 11 described below. In addition, "the first optical system 18 for imaging the wide angle image (the first image) and the imaging element 26" and "the second optical system 20 for imaging the telephoto image (the second image) and the imaging element 26" may be separately disposed.

As illustrated in Fig. 2, the image display device 10 includes an image acquisition unit 28, a display controller 30, an image synthesis unit 34, and a target image position acquisition unit 36.

The image acquisition unit 28 acquires the first image data D1 (the wide angle image data) and the second image data D2 (the telephoto image data). The image acquisition unit 28 of this example directly receives the first image data D1 and the second image data D2 from the imaging element 26 of the imaging device 14 through the original image transmitting unit 15, but is not limited thereto. For example, the first image data D1 and the second image data D2 output from the imaging element 26 may be stored in an image storage memory 32, and the image acquisition unit 28 may acquire the first image data D1 and the second image data D2 by reading the data from the image storage memory 32. The image storage memory 32 may be embedded in the imaging device 14 (the main body portion 16) or the image display device 10, or may be detachably and attachably disposed in the imaging device 14 and the image display device 10.

The target image position acquisition unit 36 analyzes the first image data D1 and the second image data D2 which are received from the image acquisition unit 28, and acquires a position and a size of an image of a target object (a display target image) of the first image and a position and a size of a display target image of the second image. An analysis method in the target image position acquisition unit 36 is not particularly limited, and the target image position acquisition unit 36 applies arbitrary image recognition processing to the first image data D1 and the second image data D2, and acquires the position and the size of the display target image of the first image and the position and the size of the display target image of the second image.

Furthermore, here "the position and the size of the display target image" may be determined by an arbitrary method. The target image position acquisition unit 36, for example, may acquire an outline position of the display target image by image recognition processing, and may determine and acquire one or a plurality of positions which are determined on the basis of the outline position as "the position of the display target image of the first image" and "the position of the display target image of the second image". In addition, the target image position acquisition unit 36 may acquire the position and the size of the display target image of the first image and the second image by the image recognition processing, and may determine and acquire the position and the size itself of the display target image as "the position and the size of the display target image of the first image" and "position and the size of the display target image of the second image".

The target image position acquisition unit 36 determines "the display target image" from the first image and the second image according to the analysis acquisition processing of "the position and the size of the display target image", and a determination method of the display target image may be realized by an arbitrary method. The target image position acquisition unit 36, for example, may preferentially determine a target positioned in the center portion of the first image and the second image as "the display target image", or may preferentially determine a target moving in the first image and the second image as "the display target image". In addition, the target image position acquisition unit 36 may determine "the display target image" in comprehensive consideration of "position information in the first image and the second image", "movement information in the first image and the second image", and/or other information items. Here, "the other information items" are not particularly limited, and may be information which can be acquired from the first image data D1 and the second image data D2, or may be information based on conditions designated by the user.

Furthermore, in each of the following embodiments, the display target image of the first image and the display target image of the second image are images of the same target.

The image synthesis unit 34 illustrated in Fig. 2 receives the first image data D1 and the second image data D2 from the image acquisition unit 28, and electronically synthesizes the first image and the second image which are displayed on the display unit 12, and thus, generates display image data D3. A specific method of generating the display image data D3 in the image synthesis unit 34 is not particularly limited. The image synthesis unit 34 of this example generates the display image data D3 under control of the display controller 30 by electronically synthesizing "the first image data D 1 indicating the first image" and "the second image data D2 indicating the second image", and may generate the display image data D3 by optically synthesizing the first image and the second image.

The display controller 30 controls processing of generating the display image data D3 in the image synthesis unit 34, and controls display of an image in an image display region 13 of the display unit 12.

For example, the display controller 30 determines a size of a display region of the first image and a size of a display region of the second image in the display unit 12 according to the size of the display target image of the first image and the size of the display target image of the second image. More specifically, the display controller 30 determines a display size of at least one of the first image or the second image (in this example, both of the first image and the second image) in the display unit 12, on the basis of "the position and the size of the display target image of the first image" and "the position and the size of the display target image of the second image" which are acquired by the target image position acquisition unit 36.

Furthermore, here "the display size" may be a concept indicating a size of a region in which an image is displayed in the image display region 13 of the display unit 12, or may be a concept indicating a size of a display magnification of the image in addition to the size of the display region. In a case where "the display size" is a concept including the size of the display magnification of the image, the display controller 30 acquires a suitable display magnification by performing calculation, on the basis of the "the size of each display region of the first image and the second image in the display unit 12" and "the position and the size of the display target image of the first image and the second image".

The display controller 30 transmits information data of "the size of the display region of the first image and the size of the display region of the second image" and "the display size of the first image and the second image in the display unit 12", which are determined as described above, to the image synthesis unit 34. The image synthesis unit 34 generates the display image data D3 from the first image data D1 and the second image data D2 on the basis of the information data received from the display controller 30, and transmits the generated display image data D3 to the display controller 30.

The display controller 30 transmits the display image data D3 which is received from the image synthesis unit 34 to the display unit 12 through the display image transmitting unit 11, and thus, displays the first image and the second image which are electronically or optically synthesized by the image synthesis unit 34 on the display unit 12. Furthermore, the display controller 30 acquires and retains information relevant to display properties of the display unit 12 in advance, and for example, includes data of the size (a screen resolution) of the image display region 13. The display controller 30 transmits information data considering such information relevant to the display properties of the display unit 12 to the image synthesis unit 34, and generates the display image data D3 considering the display properties of the display unit 12 in the image synthesis unit 34.

The display unit 12 displays the display image data D3 which has been transmitted under control of the display controller 30 on the image display region 13.

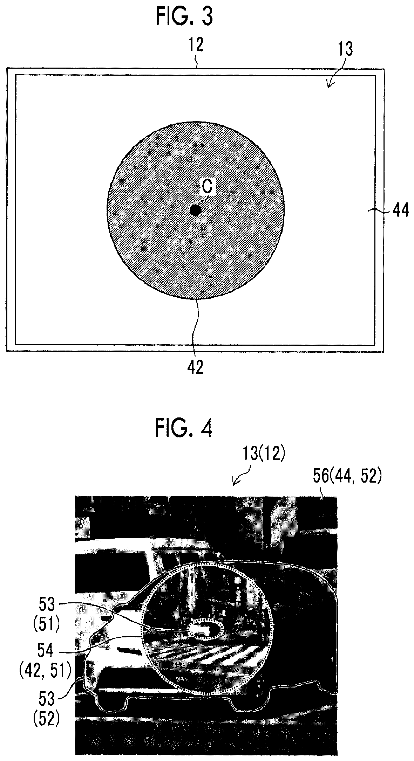

Fig. 3 is a plan view illustrating the image display region 13 of the display unit 12.

The image display region 13 of the display unit 12 of this example has a tetragonal (rectangular) planar shape, and is configured of a screen center portion 42 having a circular planar shape centering on a gravity center C of the image display region 13, and a screen peripheral portion 44 around the screen center portion 42.

The display controller 30 (refer to Fig. 2) displays the first image and the second image on the display unit 12 in a state where a display rate of the first image (the wide angle image) is set to be larger than a display rate of the second image (the telephoto image) in the screen center portion 42 of the image display region 13 of the display unit 12.

In addition, the display controller 30 displays the first image and the second image on the display unit 12 in a state where the display rate of the first image is set to be smaller than the display rate of the second image in the screen peripheral portion 44 of the image display region 13 of the display unit 12 or in a state where the display rate of the first image is set to be identical to the display rate of the second image.

Furthermore, in Fig. 3, a case is illustrated in which "the tetragonal image display region 13" is configured of "the screen center portion 42 having a circular planar shape" and "the screen peripheral portion 44", but the size or the shape of the screen center portion 42, the screen peripheral portion 44, and the image display region 13 of the display unit 12 is not particularly limited. For example, the planar shape of the screen center portion 42 may be a tetragonal shape, and the planar shape of the image display region 13 may be shapes other than the tetragonal shape. In addition, the display controller 30 (refer to Fig. 2) may adaptively adjust the planar shape, the size, and the range of the screen center portion 42 and the screen peripheral portion 44 in the image display region 13 of the display unit 12 according to the contents of the image, the imaging conditions, or other conditions of the first image (the wide angle image) and the second image (the telephoto image).

Next, a specific synthesized display example of the first image (the wide angle image) and the second image (the telephoto image) will be described.

### <First Synthesized Display Example>

Fig. 4 is a diagram illustrating a first synthesized display example of a first image 51 (a wide angle image) and a second image 52 (a telephoto image). Furthermore, in Fig. 4, an example is illustrated in which the image display region 13 has a regular tetragonal planar shape, but the planar shape of the image display region 13 is not particularly limited, and for example, as illustrated in Fig. 3, the image display region 13 may have a rectangular planar shape having a different length and a different width.

The display controller 30 (refer to Fig. 2) of this example simultaneously displays the first image 51 and the second image 52 on the image display region 13 of the display unit 12 in a state where a region 54 in which the first image 51 is displayed (hereinafter, referred to as a "first image display region") is set to be narrower than a region 56 in which the second image 52 is displayed (hereinafter, referred to as a "second image display region"), and the first image display region 54 is disposed in the second image display region 56, in the image display region 13 of the display unit 12.

In particular, the display controller 30 of this example does not display the second image 52 in the first image display region 54 in which the first image 51 is displayed in the display unit 12. That is, the display controller 30 sets the screen center portion 42 of the image display region 13 in the first image display region 54, and sets the screen peripheral portion 44 which does not include the screen center portion 42 of the image display region 13 in the second image display region 56.

In addition, the display controller 30 allows a position of a display target image 53 of the first image 51 in the display unit 12 to be coincident with a position of a display target image 53 of the second image 52 in the display unit 12. In a case where the position of the display target image 53 is matched between the first image 51 and the second image 52 in the display unit 12, conditions for setting "the position of the display target image 53" which becomes the basis are not particularly limited. For example, the display controller 30 may determine the display size of the first image 51 and the second image 52 in the display unit 12 on the basis of the center position (the gravity center position) of display target image 53 such that the gravity center position of the display target image 53 is approximately matched between the first image 51 and the second image 52 in the display unit 12 (the image display region 13). In the example illustrated in Fig. 4, the position of "the gravity center of the display target image 53 of the first image 51" is coincident with the position of "the gravity center of the display target image 53 of the second image 52".

In addition, the display controller 30 determines "the size of the first image display region 54 and the size of the second image display region 56" and "the display size of the first image and the second image in the display unit 12" such that the first image display region 54 is set to be smaller than an outer circumferential portion (an outline) of the display target image 53 of the second image 52 which is displayed in the second image display region 56. That is, the display controller 30 disposes the first image display region 54 on the inside of the outer circumferential portion (the outline) of the display target image 53 of the second image 52, and sets "a size of a display region (the first image display region 54) of the first image 51 configuring a front image" to be smaller than "the size of the display target image 53 of the second image 52 configuring a back image".

In addition, when the display controller 30 determines "the size of the first image display region 54 and the size of the second image display region 56" and "the display size of the first image 51 and the second image 52 in the display unit 12 (the first image display region 54 and the second image display region 56)", a display field angle of the first image 51 is set to be larger than a display field angle of the second image 52 in the display unit 12 (the image display region 13). In particular, the display controller 30 determines "the size of the first image display region 54 and the size of the second image display region 56" and "the display size of the first image and the second image in the display unit 12" such that the first image display region 54 is set to be larger than the outer circumferential portion (the outline) of the display target image 53 of the first image 51 which is displayed in the first image display region 54. Thus, the display field angle of the first image 51 and the second image 52 is set such that the first image 51 which is displayed in the first image display region 54 of the display unit 12 includes the outer circumferential portion (the outline) of the display target image 53, and thus, the user is able to easily and continuously track the display target image 53.

The display controller 30 provides information data indicating the conditions described above to the image synthesis unit 34 (refer to Fig. 2), and generates the display image data D3 satisfying the conditions described above in the image synthesis unit 34. Then, the display controller 30 receives the display image data D3 from the image synthesis unit 34, transmits the display image data D3 to the display unit 12, and displays a planar synthesized image of the first image 51 and the second image 52 as illustrated in Fig. 4 on the image display region 13 of the display unit 12.

By displaying "the synthesized image of the first image 51 and the second image 52" satisfying the conditions described above on the display unit 12, the user is able to simply and accurately grasp the state of the display target image 53 of the first image 51 and the second image 52. For example, the user is able to confirm specific information of the display target image 53 by referring to both of the first image 51 (the wide angle image) and the second image 52 (the telephoto image) which are displayed on the display unit 12 while grasping the movement of the display target image 53 by referring to the first image 51 (the wide angle image) which is displayed on the display unit 12. In addition, the user is able to view the state of the periphery of the display target image 53 by referring to the first image 51 in the first image display region 54 of the display unit 12, and thus, the display target image 53 is easily captured and tracked. In addition, "the display target image 53 of the second image 52" is displayed in the second image display region 56 of the periphery of the first image display region 54 in an enlarged state, and thus, the user is able to confirm that the display target image 53 is reliably captured and tracked.

As described above, according to the image display method of this example, as illustrated in Fig. 4, the user is able to visually recognize both of the display target image 53 of the first image 51 and the display target image 53 of the second image 52 without requiring a large movement in a line of sight, and thus, it is possible to reduce a burden on the user. In particular, the first image 51 which is a wide angle image is disposed in the screen center portion 42, and thus, the user is able to simply and accurately recognize the state of the periphery of the display target image 53. In addition, the first image 51 is displayed on the inside of the outer circumferential portion (the outline) of the display target image 53 of the second image 52 which is a telephoto image, and thus, the user is able to recognize the state of the outer circumferential portion (the outline) of the display target image 53 from the second image 52 (the telephoto image) while recognizing the state of the periphery of the display target image 53 from the first image 51 (the wide angle image). Thus, the user is able to easily grasp the contents of the first image 51 and the second image 52 (in particular, the display target image 53), and to suitably grasp the position and the state of the display target image 53 in the entire image.

In addition, the first image 51 and the second image 52 are independently displayed without being mixed, and thus, each of the first image 51 and the second image 52 is able to be clearly displayed on the display unit 12.

### <Second Synthesized Display Example>

In this example, the same reference numerals will be applied to the same constituents as those of the first synthesized display example described above, and the detailed description thereof will be omitted.

The display controller 30 (refer to Fig. 2) of this example mixedly displays the first image 51 and the second image 52 in at least a part of the region in which the first image 51 is displayed (the first image display region 54) in the display unit 12.

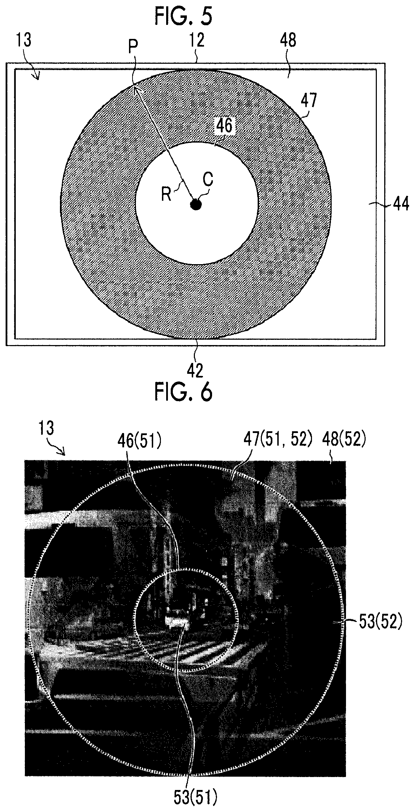

Fig. 5 is a plan view of the display unit 12 (the image display region 13) for illustrating a second synthesized display example of the first image (the wide angle image) and the second image (the telephoto image).

The image display region 13 of the display unit 12 of this example is configured of a first single image display region 46 positioned in the center portion centering on the gravity center C of the image display region 13, a mixed image display region 47 positioned on the outside of the first single image display region 46, and a second single image display region 48 positioned on the outside of the mixed image display region 47.

The position, the size, and the planar shape of the first single image display region 46, the mixed image display region 47, and the second single image display region 48 are not particularly limited. In the example illustrated in Fig. 5, the first single image display region 46 has a circular planar shape, the mixed image display region 47 has a planar shape having a cylindrical sectional shape, and the second single image display region 48 is configured of a region other than the first single image display region 46 and the mixed image display region 47 in the image display region 13.

The first single image display region 46 is a region in which only the first image 51 is displayed, the mixed image display region 47 is a region in which the first image 51 and the second image 52 are mixedly displayed, and the second single image display region 48 is a region in which only the second image 52 is displayed. Therefore, the region in which the first image 51 is displayed (the first image display region 54) is configured of the first single image display region 46 and the mixed image display region 47, and the region in which the second image 52 is displayed (the second image display region 56) is configured of the mixed image display region 47 and the second single image display region 48.

The display controller 30 continuously changes the display rate of the second image 52 with respect to the first image 51 in a direction (refer to an arrow "R" in Fig. 5) towards an outline P which is a peripheral portion from the gravity center C which is the center portion of the first image 51 in at least a part of the region (in the example illustrated in Fig. 5, the mixed image display region 47) in which the first image display region 54 is displayed in the display unit 12, and in particular, in this example, the display rate of the second image 52 with respect to the first image 51 continuously increases.

Fig. 6 is a diagram illustrating a second synthesized display example of the first image 51 (the wide angle image) and the second image 52 (the telephoto image). Furthermore, in Fig. 6, an example is illustrated in which the image display region 13 has a regular tetragonal planar shape, but the planar shape of the image display region 13 is not particularly limited, and for example, as illustrated in Fig. 5, the image display region 13 may have a rectangular planar shape having a different length and a different width.

In this example, as illustrated in Fig. 6, the first image 51 is displayed in the first single image display region 46 and the mixed image display region 47, and the second image 52 is displayed in the mixed image display region 47 and the second single image display region 48.

The mixed image display region 47 is the region in which the first image 51 and the second image 52 are mixedly displayed, the display rate of the second image 52 with respect to the first image 51 continuously increases in the direction (refer to the arrow "R" in Fig. 5) towards the outline from the gravity center (the center) of the first image 51. That is, in a direction towards "a boundary portion between the mixed image display region 47 and the second single image display region 48" from "a boundary portion between the first single image display region 46 and the mixed image display region 47", a mixing ratio (a display ratio) of the first image 51 in the mixed image display region 47 gradually decreases, and a mixing ratio (a display ratio) of the second image 52 in the mixed image display region 47 gradually increases.

In addition, the first single image display region 46 is smaller than the outer circumferential portion (the outline) of the display target image 53 of the second image 52 which is displayed in the second image display region 56 (the mixed image display region 47 and the second single image display region 48). In addition, the display target image 53 of the first image 51 is disposed in the first single image display region 46. That is, the first single image display region 46 is larger than the outer circumferential portion (the outline) of the display target image 53 of the first image 51 which is displayed in the first single image display region 46. For this reason, the first image display region 54 becomes smaller than the outer circumferential portion (the outline) of the display target image 53 of the second image 52 which is displayed in the second image display region 56, and the display target image 53 of the first image 51 is disposed on the inside of the outer circumferential portion (the outline) of the display target image 53 of the second image 52.

Furthermore, the second synthesized display example illustrated in Fig. 6 satisfies the following conditions, as with the first synthesized display example illustrated in Fig. 4.

That is, the first image display region 54 (the first single image display region 46 and the mixed image display region 47) is narrower than the second image display region 56 (the mixed image display region 47 and the second single image display region 48), and thus, is disposed in the second image display region 56. In addition, in the display unit 12 (the image display region 13), the gravity center position of the display target image 53 of the first image 51 is coincident with the gravity center position of the display target image 53 of the second image 52. In addition, in the display unit 12 (the image display region 13), the display field angle of the first image 51 is larger than the display field angle of the second image 52, and the first image display region 54 is larger than the outer circumferential portion (the outline) of the display target image 53 of the first image 51 which is displayed in the first image display region 54.

The display controller 30 determines "the size of the first image display region 54 and the size of the second image display region 56" and "the display size of the first image 51 and the second image 52 in the display unit 12 (the first image display region 54 and the second image display region 56)" which satisfy the conditions described above.

The display controller 30 provides the information data indicating the conditions described above to the image synthesis unit 34 (refer to Fig. 2), and generates the display image data D3 satisfying the conditions described above in the image synthesis unit 34. Then, the display controller 30 receives the display image data D3 from the image synthesis unit 34, transmits the display image data D3 to the display unit 12, and displays the synthesized image of the first image 51 and the second image 52 as illustrated in Fig. 6 on the image display region 13 of the display unit 12.

As described above, according to the image display method of this example, as illustrated in Fig. 6, the user is able to visually recognize both of the display target image 53 of the first image 51 and the display target image 53 of the second image 52.

In particular, in this example, both of the first image 51 and the second image 52 are displayed in a part of the image display region 13 (the mixed image display region 47) of the display unit 12 in a visible state, and thus, it is possible to substantially increase the display region of the first image 51 and the second image 52, compared to the first synthesized display example (refer to Fig. 4) described above. For this reason, both images of the first image 51 and the second image 52 are displayed on the display unit 12 in a wide range, and the user is able to simply confirm the state of the display target image 53 from the first image 51 and the second image 52 which are displayed in a wide range.

### <Regarding Display Aspect based on Human Visual Characteristics>

Next, a method of determining a display aspect of the first image and the second image in the display unit 12 on the basis of human visual characteristics will be described.

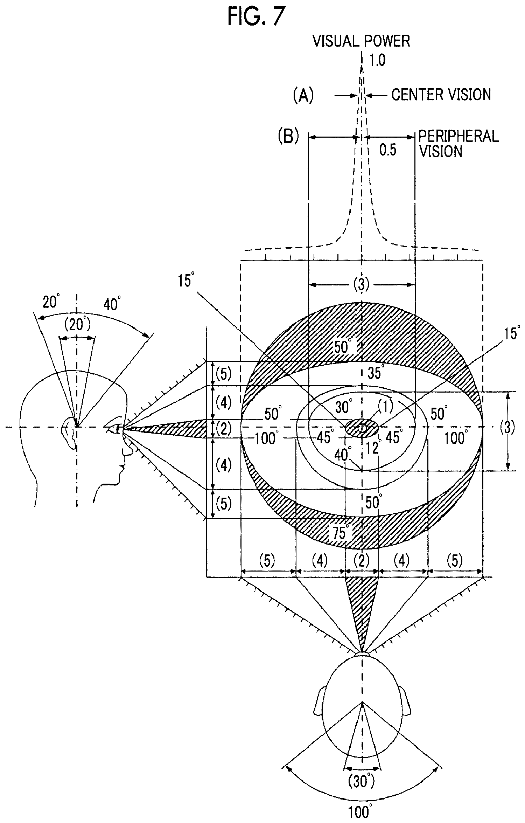

Fig. 7 is a diagram illustrating view properties from the viewpoint of a visual function (a visual power), an information-seeking motion, and an inducing effect and is identical to a diagram provided by The Institute of Image Information and Television Engineers (The Institute of Image Information and Television Engineers, 2009, All Rights Reserved). Furthermore, it is possible to refer to the diagram provided by The Institute of Image Information and Television Engineers, for example, by accessing the following address (uniform resource locator: URL) on the Internet.
http://Dbnst.nii.ac.jp/view_image/2515/4526?height=785&wiDth=421

In Fig. 7, a symbol "(A)" indicates a range of "center vision", is a high performance information processing range, and corresponds to a retina center portion of a human eye. The center vision range (A) includes a range of "a discriminative visual field" (refer to a symbol "(1)" in Fig. 7) and a range of "an effective visual field" (refer to a symbol "(2)" in Fig. 7).

The discriminative visual field range (1) is a high density information processing range in which a visual function such as a visual power is excellent, and corresponds to the center portion of the human eye (a pupil or the like). The effective visual field range (2) is a range in which a line of sight is instantly moved and information is able to be accepted with high performance, and corresponds to a visible range of less than or equal to ±15° in a horizontal direction based on the center portion of the human eye (the pupil or the like), of less than or equal to 8° in an upper direction, and of less than or equal to 12° in a lower direction.

On the other hand, in Fig. 7, a symbol "(B)" indicates a range of "a peripheral vision", is a range which a wide range of information can be accepted even though the performance is low, and corresponds to a retina peripheral portion of the human eye. The peripheral vision range (B) includes a range of "a stable main visual field" (refer to a symbol "(3)" in Fig. 7), a range of "an induced visual field" (refer to a symbol "(4)" in Fig. 7), and a range of "an auxiliary visual field" (refer to a symbol "(5)" in Fig. 7).

The stable main visual field range (3) is a range in which information can be comfortably accepted according to a motion of a human head on the basis of the effective visual field range (2), and is a range in which effective information display can be performed in an information terminal utilization space. The stable main visual field range (3) corresponds to a visible range of ±30° to 45° in the horizontal direction based on the center portion of the human eye (the pupil or the like), of 20° to 30° in the upper direction, and of 25° to 40° in the lower direction.

The induced visual field range (4) is a range in which a coordinate system inducing effect of visual information is obtained, and a realistic sensation occurs, and corresponds to a visible range of less than or equal to ±50° in the horizontal direction based on the center portion of the human eye (the pupil or the like), of less than or equal to 35° in the upper direction, and of less than or equal to 50° in the lower direction.

The auxiliary visual field range (5) is a range in which only simple visual information can be detected and accepted, and corresponds to a visible range of less than or equal to ±100° in the horizontal direction based on the center portion of the human eye (the pupil or the like), of less than or equal to 50° in the upper direction, and of less than or equal to 70° in the lower direction.

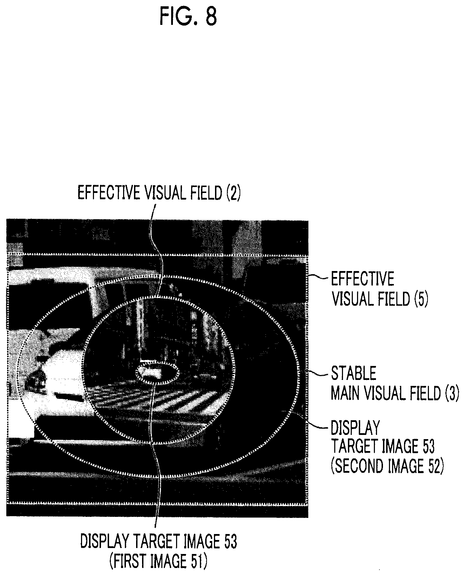

Fig. 8 is a diagram illustrating a display example of the first image 51 and the second image 52 considering human visual characteristics. In Fig. 8, a case is illustrated in which the display aspect considering the human visual characteristics illustrated in Fig. 7 is applied to the first synthesized display example described above (refer to Fig. 4). Furthermore, the display aspect considering the human visual characteristics illustrated in Fig. 7 can to be applied to the second synthesized display example described above (refer to Fig. 6), as with the first synthesized display example.

It is preferable that the display controller 30 controls the image synthesis unit 34 and the display unit 12, generates the display image data D3 satisfying the following conditions in the image synthesis unit 34, and displays the display image data D3 on the display unit 12.

That is, the display target image 53 of the first image 51 is disposed in the effective visual field range (2) (refer to Fig. 8), and is preferably disposed in the discriminative visual field range (1).

In addition, the first image display region 54 in which the first image 51 is displayed is set on the basis of the effective visual field range (2). In the example illustrated in Fig. 8, the first image display region 54 and the effective visual field range (2) may be set to the same range, and a specific range including the effective visual field range (2) may be set to the first image display region 54.

In addition, the display target image 53 of the second image 52 (in particular, the outer circumferential portion (the outline) of the display target image 53) is set on the basis of the stable main visual field range (3). It is preferable that the display target image 53 of the second image 52 is disposed in the stable main visual field range (3), and the entire outer circumferential portion (the entire outline) of the display target image 53 of the second image 52 is positioned in the stable main visual field range (3), and a part of the outer circumferential portion (the outline) of the display target image 53 of the second image 52 (preferably greater than or equal to 1/2, more preferably greater than or equal to 3/4, and even more preferably greater than or equal to 7/8, of the entire outer circumferential portion (the entire outline)) may be positioned in the stable main visual field range (3).

In addition, the image display region 13 of the display unit 12 and the region in which the second image 52 is displayed (the second image display region 56) are set on the basis of the induced visual field range (4) or the auxiliary visual field range (5). For example, a specific range including the induced visual field range (4) or the auxiliary visual field range (5) may be set to the second image display region 56.

As described above, "the synthesized image of the first image 51 and the second image 52" is generated and displayed in consideration of the human visual characteristics, and thus, the user is able to comfortably and suitably grasp the first image 51 and the second image 52 (in particular, the display target image 53).

### <Image Display Processing Flow>

Next, an example of an image display processing flow of the image display device 10 illustrated in Fig. 2 will be described.

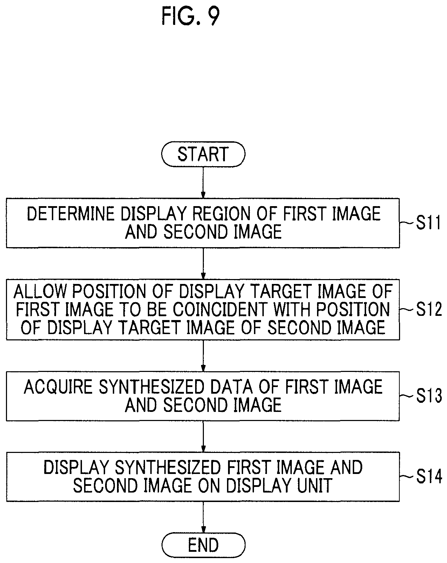

Fig. 9 is a flowchart illustrating an example of an image display method.

First, "the first image display region 54" and "the second image display region 56" which are the display regions of the first image 51 and the second image 52 in the display unit 12 (the image display region 13) are determined by the display controller 30 (S11 of Fig. 9). More specifically, the second image display region 56 includes the first image display region 54, and the first image display region 54 is set to be narrower than the second image display region 56. Furthermore, the display controller 30, for example, may determine the first image display region 54 and the second image display region 56 on the basis of image properties of the first image data D1 and the second image data D2 (for example, an image size, an image resolution, and the like) which are acquired through the image acquisition unit 28 in addition to the conditions described above as illustrated in Fig. 4 or Fig. 6, or may determine the first image display region 54 and the second image display region 56 according to region information set in advance.

Then, the position of the display target image 53 of the first image 51 is coincident with the position of the display target image 53 of the second image 52 in the display unit 12 (the image display region 13) by the display controller 30 (S12). More specifically, the display controller 30 sets the position of the display target image 53 of the first image 51 (for example, the gravity center position) to be coincident with the position of the display target image 53 of the second image 52 (for example, the gravity center position) in the display unit 12 (the image display region 13).

Then, the display controller 30 acquires the display image data D3 which is the synthesis data of the first image 51 and the second image 52 from the image synthesis unit 34 (S13). That is, the display controller 30 controls the image synthesis unit 34, and generates the display image data D3 satisfying the conditions which are determined in steps S11 and S12 described above and other conditions in the image synthesis unit 34.

Then, the display controller 30 transmits the display image data D3 on the display unit 12, and displays the first image 51 and the second image 52 which are synthesized on the display unit 12 (the image display region 13) (S14).

By the image display method including a set of processing steps S11 to S14 described above, the position of the display target image 53 of the first image 51 in the display unit 12 can be coincident with the position of the display target image 53 of the second image 52 in the display unit 12 in a state where the region in which the first image 51 is displayed (the first image display region 54) is set to be narrower than the region in which the second image 52 is displayed (the second image display region 56) in the display unit 12, and thus, the first image 51 and the second image 52 can be simultaneously displayed on the display unit 12.

As described above, according to this embodiment, the user rarely moves the line of sight at the time of observing "the display target image 53 of the first image 51" and "the display target image 53 of the second image 52" which are a plurality of channel images of a target object, and thus, it is possible to considerably reduce a burden on the user, and it is also possible to improve usability.

Furthermore, the image display system 5 (the image display device 10) according to the embodiment described above is only an example, and other modifications may be added.

### <First Modification Example>

In this modification example, the same reference numerals will be applied to configurations which are identical to or similar to those of the embodiment described above, and the detailed description thereof will be omitted.

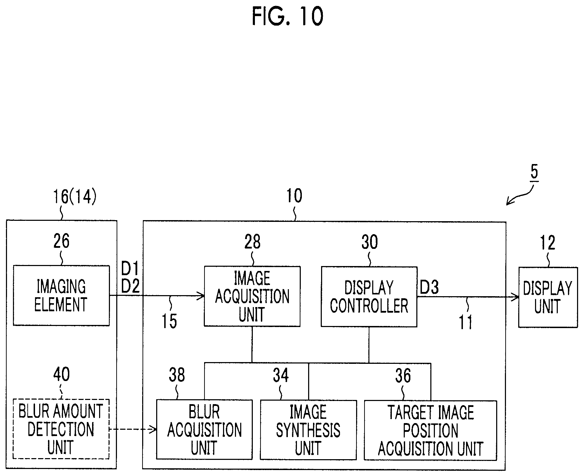

Fig. 10 is a block diagram illustrating a functional configuration example of the image display system 5 according to a first modification example.

The image display device 10 according to this modification example further includes a blur acquisition unit 38 in addition to the image acquisition unit 28, the display controller 30, the image synthesis unit 34, and the target image position acquisition unit 36. The blur acquisition unit 38 acquires a blur amount of at least one of the display target image 53 of the first image 51 or the display target image 53 of the second image 52.

Herein, "the blur amount" may be data indicating a size of a movement of the imaging device 14 itself at the time of performing imaging, may be data indicating a size of an operation of an object (in particular, an object which becomes a target of the display target image 53), or may be data in which the above-described data items are complexly combined.

In addition, an acquisition method of "the blur amount" described above using the blur acquisition unit 38 is not particularly limited. The blur acquisition unit 38, for example, may analyze the first image data D1 and the second image data D2 which are acquired through the image acquisition unit 28 and may acquire "the blur amount" described above, may dispose a blur amount detection unit 40 which is able to detect the movement amount (the blur amount) of the imaging device 14 itself by using sensors such as a gyro sensor in the imaging device 14 (the main body portion 16) and may acquire "the blur" from the blur amount detection unit 40, or may acquire "the blur amount" by other methods.

The display controller 30 receives data indicating the blur amount which is acquired by the blur acquisition unit 38, and determines the display ratio of at least one of the first image 51 or the second image 52 in the display unit 12 on the basis of the blur amount.

That is, in a case where "the blur amount of at least one of the display target image 53 of the first image 51 or the display target image 53 of the second image 52" which is acquired by the blur acquisition unit 38 is greater than or equal to a first threshold value, the display controller 30 of this example sets a display ratio of the first image 51 (the wide angle image) to be larger than that in a case where the blur amount which is acquired by the blur acquisition unit 38 is less than the first threshold value. In addition, in a case where the blur amount which is acquired by the blur acquisition unit 38 is less than or equal to a second threshold value, the display controller 30 of this example sets a display ratio of the second image 52 (the telephoto image) to be larger than that in a case where the blur amount which is acquired by the blur acquisition unit 38 is greater than the second threshold value.

Herein, "the display ratio" may be a ratio of a display area of the image display region 13 to the entire region in the display unit 12. In this case, in a case where the blur amount which is acquired by the blur acquisition unit 38 is greater than or equal to the first threshold value, a display area of the first image 51 (the wide angle image) in the display unit 12 (the image display region 13) becomes larger than that in a case where the blur amount which is acquired by the blur acquisition unit 38 is less than the first threshold value. In addition, in a case where the blur amount which is acquired by the blur acquisition unit 38 is less than or equal to the second threshold value, a display area of the second image 52 (the telephoto image) becomes larger than that in a case where the blur amount which is acquired by the blur acquisition unit 38 is greater than the second threshold value.

In addition, as in the second synthesized display example (refer to Fig. 5 and Fig. 6) described above, in a case where the display controller 30 mixedly displays the first image 51 and the second image 52 in at least a part of the region (refer to "the mixed image display region 47" in Fig. 5) in which the first image 51 is displayed in the display unit 12, "the display ratio" may be a mixing ratio of display in an area of "at least a part" described above of the region in which the first image 51 is displayed in the display unit 12. In this case, in a case where the blur amount which is acquired by the blur acquisition unit 38 is greater than or equal to the first threshold value, a mixing ratio (a display rate) of the first image 51 (the wide angle image) in the display unit 12 (the image display region 13) becomes larger than that in a case where the blur amount which is acquired by the blur acquisition unit 38 is less than the first threshold value. In addition, in a case where the blur amount which is acquired by the blur acquisition unit 38 is less than or equal to the second threshold value, a mixing ratio (a display rate) of the second image 52 (the telephoto image) becomes larger than that in a case where the blur amount which is acquired by the blur acquisition unit 38 is greater than the second threshold value.

Furthermore, a specific value of the first threshold value and the second threshold value is not particularly limited, and may be suitably set by the user or a maker (a manufacturer), but the first threshold value becomes a value larger than the second threshold value. That is, the first threshold value is a value for setting a state in which it is preferable that the display ratio of the first image 51 (the wide angle image) having a large blur amount is large, and thus, is set to a comparatively large value. On the other hand, the second threshold value is a value for setting a state in which it is preferable that the display ratio of the second image 52 (the telephoto image) having a small blur amount is large, and thus, is set to a comparatively small value.

Other configurations are identical to those of the embodiment described above illustrated in Fig. 2 or the like.

According to the image display device 10 of this modification example, it is possible to adaptively change the display aspect of the first image 51 and the second image 52 in the display unit 12 according to the movement of the object (the display target image 53) or the movement of the imaging device 14.

For example, in a case where the movement of the object (the display target image 53) or the movement of the imaging device 14 is active, it is difficult to track the object, and thus, it is preferable that the display ratio of the first image 51 (the wide angle image) in a wide angle of view, in which information for tracking the object is abundant, is large. In addition, in a case where the movement of the object (the display target image 53) or the movement of the imaging device 14 is active, an influence of a blur in the telephoto image which is displayed on the display unit 12 is more considerable than in the wide angle image, and there is a case where the user is not able to sufficiently recognize the contents of the telephoto image to be displayed. For this reason, in a case where the movement of the object (the display target image 53) or the movement of the imaging device 14 is active, it is appropriate that the display ratio of the second image 52 which is a telephoto image becomes smaller than that in a case where the movement is small from the viewpoint of effectively using a system resource.

In this modification example, in a case where "the blur amount" which is acquired by the blur acquisition unit 38 is greater than or equal to the first threshold value, the display ratio of the first image 51 becomes larger than that in a case where "the blur amount" is less than the first threshold value, the user is able to simply and accurately track the object (the display target image 53) while confirming the first image 51 (the wide angle image) including abundant information.

In contrast, in a case where the object (the display target image 53) or the imaging device 14 is rarely moved, an influence of a blur is extremely small even in a telephoto image which is displayed on the display unit 12, and thus, it is preferable that the display ratio of the second image (the telephoto image) which is presented by specific information at a higher magnification is large. In this modification example, in a case where "the blur amount" is less than or equal to the second threshold value, the display ratio of the second image 52 becomes larger than that in a case where "the blur amount" is greater than the second threshold value, and thus, the user is able to simply and accurately observe the object while confirming the second image 52 (the telephoto image) in which specific information is displayed with excellent visibility.

### <Second Modification Example>

In this modification example, the same reference numerals will be applied to configurations which are identical to or similar to those of the embodiment described above and the first modification example, the detailed description thereof will be omitted.

The display controller 30 according to this modification example stereoscopically displays at least one of the first image 51 and the second image 52 in the display unit 12, and sets a depth position of the display target image 53 of the first image 51 to be different from a depth position of the display target image 53 of the second image 52 in the display unit 12.

For example, in the image display device 10 illustrated in Fig. 2 or Fig. 10, the display controller 30 acquires depth information relevant to the first image 51 (including the display target image 53) and depth information relevant to the second image 52 (including the display target image 53) from the first image data D1 and the second image data D2. Then, the display controller 30 includes the depth information of the first image 51 and the depth information of the second image 52 in the information data which is provided to the image synthesis unit 34. The image synthesis unit 34 generates the display image data D3 necessary for stereoscopically displaying the first image 51 and the second image 52 in the display unit 12 on the basis of the depth information of the first image 51 and the depth information of the second image 52 which are provided from the display controller 30. The display controller 30 acquires the display image data D3 for a stereoscopic display from the image synthesis unit 34 and transmits the display image data D3 to the display unit 12, and the display unit 12 stereoscopically displays the synthesized image of the first image 51 and the second image 52 on the basis of the display image data D3.

Furthermore, an acquisition method of the depth information of the first image 51 and the depth information of the second image 52 using the display controller 30 is not particularly limited, and for example, the depth information may be acquired on the basis of property information and imaging information of the first image 51 and the second image 52, or depth information set in advance may be acquired as the depth information of each of the first image 51 and the second image 52.

In addition, a method of stereoscopically displaying the first image 51 and the second image 52 is not also particularly limited, and the image synthesis unit 34 is capable of generating the display image data D3 on the basis of an arbitrary stereoscopic display method. For example, in a case where a stereoscopic display method based on a binocular parallax is used, the image synthesis unit 34 may include data of a parallax image (that is, a right eye image and a left eye image) relevant to the synthesized image of the first image 51 and the second image 52 in the display image data D3. In this case, the display unit 12 displays a steric image relevant to the synthesized image of the first image 51 and the second image 52 in the image display region 13 on the basis of the data of the parallax image relevant to the synthesized image of the first image 51 and the second image 52 which is included in the display image data D3.

As described above, according to the image display device 10 of this modification example, image display may be performed by changing depth positions of images of a plurality of channels (the first image 51 and the second image 52), in particular, a depth position of the display target image 53 in each of the images in the display unit 12. In planar image display in the display unit 12, a plurality of images (the first image 51 and the second image 52) are intricately and mixedly displayed, and a case is also assumed in which it is difficult for the user to separately recognize both of the images according to an imaging scene. However, as in this modification example, the user is able to easily and separately recognize each of the images and to simultaneously acquire more information items from the image by providing a difference in the depth positions of the plurality of images (the first image 51 and the second image 52).

### <Imaging System Including Plurality of Optical Systems Having Same Optical Axis>

In the image display system 5 illustrated in Fig. 1, the first image data D1 and the second image data D2 are acquired by a single imaging device 14, and the first image data D1 and the second image data D2 may be acquired by different imaging devices 14.

Here, the first image data D1 and the second image data D2 are acquired by "an imaging system in which the first optical system 18 used for imaging the first image 51 (the wide angle image) has the same optical axis as that of the second optical system 20 used for imaging the second image 52 (the telephoto image)" described below, and thus, it is possible to prevent a parallax from occurring between the first image 51 and the second image 52, and it is possible to improve visibility of display of the synthesized image of the first image 51 and the second image 52 in the display unit 12.

Fig. 11 is a sectional view illustrating one configuration example of the first optical system 18, the second optical system 20, and the imaging element 26.

The imaging system of this example is configured of a center optical system 113 in the center portion as the first optical system 18 and an annular optical system 114 in the peripheral portion as the concentric second optical system 20, which are arranged on the same optical axis, respectively.

The center optical system 113 is a wide angle optical system (a wide angle lens) configured of a first lens 113a, a second lens 113b, a third lens 113c, a fourth lens 113d, and a common lens 115, and forms a wide angle image on a micro lens array 116 configuring the imaging element 26.

On the other hand, the annular optical system 114 is a telephoto optical system (a telephoto lens) configured of a first lens 114a, a second lens 114b, a first reflective mirror 114c as a reflective optical system, a second reflective mirror 114d, and a common lens 115, and forms a telephoto image on the micro lens array 116. A light flux which has passed through the first lens 114a and the second lens 114b is reflected two times by the first reflective mirror 114c and the second reflective mirror 114d, and then, passes through the common lens 115. The light flux is reflected by the first reflective mirror 114c and the second reflective mirror 114d, and thus, it is possible to shorten the length of the telephoto optical system (the telephoto lens) having a long focal point distance in an optical axis direction L.

The imaging element 26 of this example is configured of a directive properties sensor, and includes the micro lens array 116 and an image sensor 118.

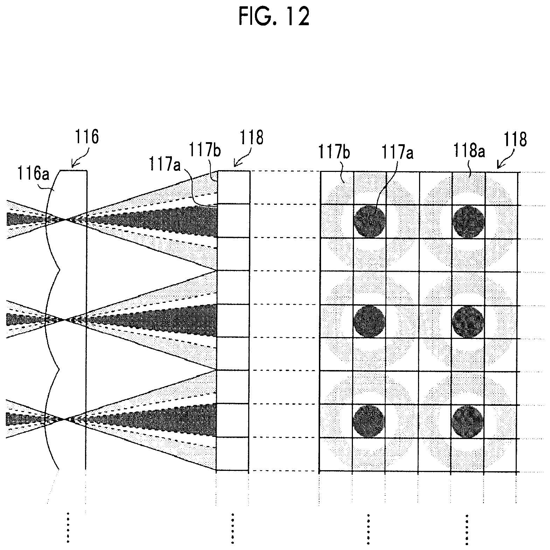

Fig. 12 is an enlarged view of a main part of the micro lens array 116 and the image sensor 118.

The micro lens array 116 is configured by two-dimensionally arraying a plurality of micro lenses (pupil imaging lenses) 116a, and a length of each micro lenses 116a in a horizontal direction and a vertical direction corresponds to a length of three light receiving cells 118a which are photoelectric conversion elements of the image sensor 118. That is, in each of the micro lenses 116a of the micro lens array 116, the micro lenses 116a formed corresponding to the positions of two light receiving cells 118a in each of the directions of the horizontal direction and the vertical direction position are used.

In addition, each of the micro lenses 116a of the micro lens array 116 forms a circular center pupil image (a first pupil image) 117a and an annular pupil image (a second pupil image) 117b respectively corresponding to the center optical system 113 and the annular optical system 114 of the imaging system on the light receiving cell 118a of the light receiving region corresponding to the image sensor 118.

According to the micro lens array 116 and the image sensor 118 illustrated in Fig. 12, 3 × 3 grid-like (square grid-like) light receiving cells 118a are assigned per one micro lens 116a of the micro lens array 116. Hereinafter, a light receiving cell group (3 × 3 light receiving cells 118a) corresponding to one micro lens 116a and one micro lens 116a will be referred to as a unit block.

The center pupil image 117a forms an image only on the light receiving cell 118a in the center of the unit block, and the annular pupil image 117b forms an image on 8 light receiving cells 118a around the unit block.

According to the first optical system 18, the second optical system 20, and the imaging element 26 having the configuration described above, it is possible to simultaneously image the wide angle image corresponding to the center optical system 113 and the telephoto image corresponding to annular optical system 114.

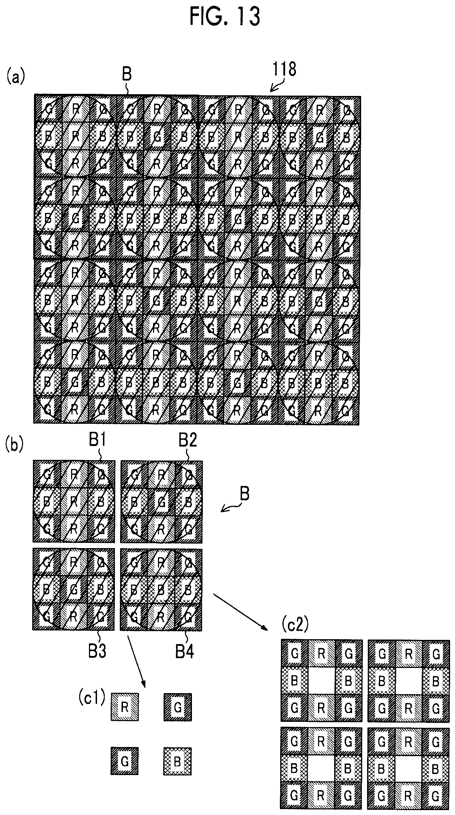

Fig. 13 is a diagram illustrating a color filter array or the like disposed on the image sensor 118. Furthermore, in Fig. 13, the micro lens array 116 is omitted, and a region indicated by a circle illustrates a unit block including 3 × 3 light receiving cells 118a on which a pupil image is formed by each of the micro lenses 116a of the micro lens array 116.

As illustrated in Fig. 13(a), a color filter array configured of a color filter which is disposed on each of the light receiving cells is disposed on an imaging surface of the image sensor 118.

The color filter array is configured of color filters of three primary colors (hereinafter, referred to as an "R filter", a "G filter", and a "B filter") which transmit light in each wavelength range of red (R), green (G), and blue (B). Then, any one of the R filter, the G filter, and the B filter is disposed on each of the light receiving cells. Hereinafter, a light receiving cell on which the R filter is disposed will be referred to as an "R light receiving cell", a light receiving cell on which the G filter is disposed will be referred to as an "G light receiving cell", and a light receiving cell on which the B filter is disposed will be referred to as an "B light receiving cell".

The color filter array illustrated in Fig. 13(a) is configured by setting 6 × 6 light receiving cells to a basic block B (a block indicated by a thick frame in Fig. 13(a), refer to Fig. 13(b)), and by repeatedly arranging the basic blocks B in the horizontal direction and the vertical direction.

As illustrated in Fig. 13(b), the basic block B is configured of 4 unit blocks B1 to B4.

Fig. 13(c1) illustrates a group of a center light receiving cell (a light receiving cell on which the light flux passing through the center optical system 113 illustrated in Fig. 12 is incident) in each of the 4 unit blocks B1 to B4, and Fig. 13(c2) illustrates a group of 8 peripheral light receiving cells (light receiving cells on which the light flux passing through the annular optical system 114 Fig. 12 is incident) in each of the 4 unit blocks B1 to B4.

As illustrated in Fig. 13(c1), an image of the group of the center light receiving cell becomes an mosaic image of a BAYER array. Accordingly, the mosaic image of the BAYER array is subjected to demosaic processing, and thus, a color image can be obtained.

On the other hand, as illustrated in Fig. 13(c2), the group of the 8 peripheral light receiving cells of each of the center light receiving cells of the unit blocks B1 to B4 includes all light receiving cells of RGB (the R light receiving cell, the G light receiving cell, and the B light receiving cell) in the 8 light receiving cells, and the light receiving cells of RGB are arranged in the same pattern regardless of the unit blocks B1 to B4.

Specifically, the G light receiving cell is disposed on 4 light receiving cells on 4 corners of each of the unit blocks B1 to B4, the R light receiving cell is disposed on 2 up and down light receiving cells interposing the center light receiving cell therebetween, and the B light receiving cell is disposed on 2 right and left light receiving cells interposing the center light receiving cell therebetween.

In addition, the R light receiving cell, the G light receiving cell, and the B light receiving cell are respectively arranged in a symmetric position with respect to the center light receiving cell (the center) of the unit block. Accordingly, demosaic processing (demosaicing processing) is performed with respect to each of the unit blocks by using output signals of the light receiving cells of RGB in the unit block, and then, one pixel (a pixel value of RGB) configuring an image may be generated.

That is, the average value of output signals (pixel values) of 4 G light receiving cells in the unit block is obtained, and thus, a pixel value of a G pixel in the center position of the unit block (one micro lens) may be acquired, and the average value of pixel values of 2 R light receiving cells and the average value of pixel values of 2 B light receiving cells in the unit block are obtained, and thus, each pixel value of an R pixel and a B pixel in the center position of the unit block may be acquired.

Accordingly, the telephoto image corresponding to the annular optical system 114 (the telephoto optical system), which is generated by the group of the 8 peripheral light receiving cells of the unit block, may be subjected to the demosaic processing by using the pixel value of the light receiving cells of RGB in the unit block, it is not necessary to generate a pixel value of a pixel in a specific wavelength range by interpolating the pixel value of the peripheral light receiving cell in the unit block, and a resolution (the substantial number of pixels) of an output image does not decrease.

The first image data D1 and the second image data D2 indicating "a wide angle image and a telephoto image not having a parallax" may be output from the imaging element 26 by "the imaging system provided with the first optical system 18 and the second optical system 20 having the same optical axis" having the configuration as described above.

Furthermore, "the imaging system provided with a plurality of optical systems having the same optical axis" described above, for example, is also described in detail in JP2014-28339, and as necessary, various modifications may be performed. In addition, "the imaging system provided with the plurality of optical systems having the same optical axis" may be realized by a imaging system having other configurations.

In addition, a reflective mirror in a reflective mirror type lens configuration of an imaging optical system is not limited to a concave mirror or a convex mirror, and may be a flat mirror, and the number of reflective mirrors is not limited to 2, and may be greater than or equal to 3.

Further, a focal point may be adjusted by disposing a movement mechanism (not illustrated) moving the common lens 115 of the center optical system 113 and the annular optical system 114, or the imaging element 26 which is a directive properties sensor in an optical axis direction L.

### <Other Modification Examples>

The embodiment described above and the modification example may be suitably combined with each other.

Each functional configuration described above may be realized by arbitrary hardware, arbitrary software, or a combination of both of the hardware and the software. For example, the present invention may be applied to a program allowing the image display method (a processing procedure) of each device and each processing unit (the image display device 10 or the like) described above to be executed in a computer, a computer readable storage media (a non-transitory storage media) storing the program, or a computer in which the program can be installed.

In addition, an aspect to which the present invention may be applied is not particularly limited, and in addition to cameras in which imaging is a main function, the present invention may be applied to mobile devices having functions (a call function, a communication function, and other computer functions) other than imaging in addition to the imaging function. Examples of other aspects to which the present invention may be applied include a cellular phone, a smart phone, personal digital assistants (PDA), and a portable game console, which have a camera function (the imaging device 14) and a display function (the display unit 12).

Hereinafter, a smart phone will be described in detail as an example with reference to the drawings.

### <Configuration of Smart Phone>

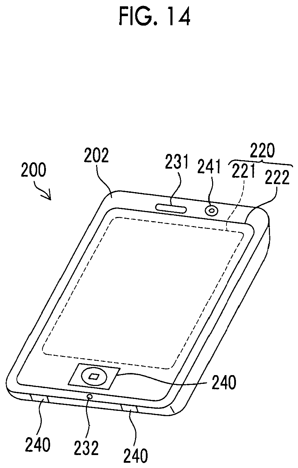

Fig. 14 is a diagram illustrating an appearance of a smart phone 200 which is another embodiment of the imaging device 14. The smart phone 200 illustrated in Fig. 14 includes a flat plate-like housing 202, and includes a display panel 221 on one surface of the housing 202 as a display unit, and a display input unit 220 in which a manipulation panel 222 as an input unit is integrated. In addition, the housing 202 includes a speaker 231, a microphone 232, a manipulation unit 240, and a camera unit 241. Furthermore, the configuration of the housing 202 is not limited thereto, and for example, a configuration in which the display unit and the input unit are independent from each other or a configuration having a folding structure or a slide mechanism may be adopted.

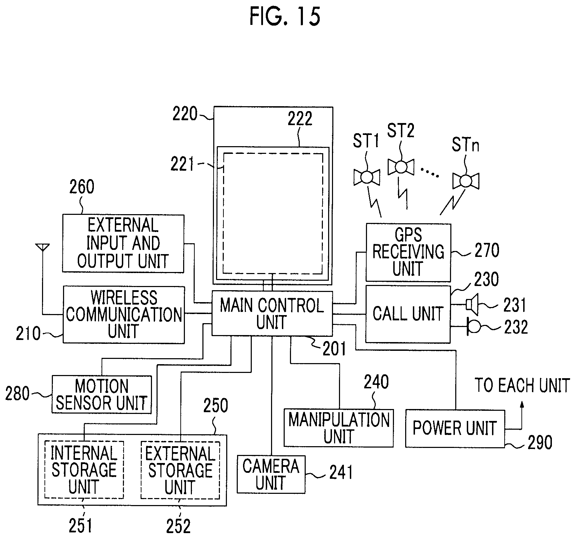

Fig. 15 is a block diagram illustrating the configuration of the smart phone 200 illustrated in Fig. 14. As illustrated in Fig. 15, the smart phone 200 includes a wireless communication unit 210, a display input unit 220, a call unit 230, a manipulation unit 240, a camera unit 241, a storage unit 250, an external input and output unit 260, a global positioning system (GPS) receiving unit 270, a motion sensor unit 280, a power unit 290, and a main control unit 201 as a main constituent of the smart phone. In addition, the smart phone 200 has a wireless communication function of performing mobile wireless communication through a base station device and a mobile communication net as a main function of the smart phone 200.

The wireless communication unit 210 performs wireless communication with respect to the base station device included in the mobile communication net according to an instruction of the main control unit 201. The wireless communication unit 210 performs transceiving with respect to various file data such as sound data and image data, e-mail data, and the like, or receiving with respect to Web data, streaming data, and the like by using wireless communication.

The display input unit 220 is a so-called touch panel which visually transmits information to the user by displaying an image (a static image and a motion picture), character information, or the like, and detects user manipulation with respect to the displayed information according to control of the main control unit 201, and includes the display panel 221 and the manipulation panel 222. In a case where the user views a generated 3D image, it is preferable that the display panel 221 is a 3D display panel.

In the display panel 221, a liquid crystal display (LCD), an organic electro-luminescence display (OELD), or the like is used as a display device.

The manipulation panel 222 is a device which is disposed such that an image displayed on a display surface of the display panel 221 is visible, and detects one or a plurality of coordinates manipulated by a finger of the user or a stylus. In a case where the device is manipulated by the finger of the user or the stylus, a detection signal generated by the manipulation is output to the main control unit 201. Next, the main control unit 201 detects a manipulation position (coordinates) on the display panel 221 on the basis of the received detection signal.

As illustrated in Fig. 14, the display panel 221 and the manipulation panel 222 of the smart phone 200 integrally configure the display input unit 220, and the manipulation panel 222 has an arrangement of completely covering the display panel 221. In a case where such an arrangement is adopted, the manipulation panel 222 may have a function of detecting the user manipulation in a region other than the display panel 221. In other words, the manipulation panel 222 may include a detection region (hereinafter, referred to as a "display region") with respect to a superimposition portion superimposed on the display panel 221, and the other detection region (hereinafter, referred to as a "non-display region") with respect to an outer peripheral portion not superimposed on the display panel 221.

Furthermore, the size of the display region may be completely coincident with the size of the display panel 221, but it is not necessary that both of the sizes are coincident with each other. In addition, the manipulation panel 222 may include an outer peripheral portion, and two sensitive regions in an inside portion other than the outer peripheral portion. Further, the width of the outer peripheral portion is suitably designed according to the size of the housing 202 and the like. In addition, examples of a position detection system adopted in the manipulation panel 222 include a matrix switching system, a resistance film system, a surface acoustic wave system, an infrared system, an electromagnetic induction system, an electrostatic capacitance system, and the like, and any system may be adopted.

The call unit 230 includes the speaker 231 or the microphone 232, and outputs the sound of the user which is input through the microphone 232 to the main control unit 201 by converting the sound into sound data which can be processed in the main control unit 201, or output sound data which is received by the wireless communication unit 210 or the external input and output unit 260 from the speaker 231 by decoding the sound data. In addition, as illustrated in Fig. 14, for example, the speaker 231 may be mounted on a surface identical to a surface on which the display input unit 220 is disposed, and the microphone 232 may be mounted on a side surface of the housing 202.

The manipulation unit 240 is a hardware key using a key switch or the like, and receives an instruction form the user. For example, the manipulation unit 240 is mounted on a lower portion, that is, a lower side surface, of the display unit of the housing 202 of the smart phone 200, and is a push button type switch which is turned on in a case where the manipulation unit 240 is pressed by a finger or the like, and which is turned off due to a restoring force of a spring or the like in a case where the finger is separated from the manipulation unit 240.

The storage unit 250 stores a control program or control data of the main control unit 201, address data associated with a name of a communication partner, a phone number, and the like, data of a transceived e-mail, Web data downloaded by Web browsing, and downloaded content data, and temporarily stores streaming data and the like. In addition, the storage unit 250 is configured of a external storage unit 252 including an external memory slot which is detachable and attachable with respect to an internal storage unit 251 embedded in the smart phone. Furthermore, each of the internal storage unit 251 and the external storage unit 252 configuring the storage unit 250 is realized by using a storage medium such as a flash memory type memory, a hard disk type memory, a multimedia card micro type memory, a card type memory (for example, a Micro SD (Registered Trademark) memory and the like), a random access memory (RAM), a read only memory (ROM), and the like.

The external input and output unit 260 has a function of an interface with respect to all external devices which are connected to the smart phone 200, and is directly or indirectly connected to other external devices through communication or the like (for example, a universal serial bus (USB), IEEE1394, and the like) or a network (for example, an internet, a wireless LAN, BLUETOOTH (Registered Trademark), radio frequency identification (RFID), infrared communication (infrared data association: IrDA) (Registered Trademark), ultra wideband (UWB) (Registered Trademark), ZIGBEE (Registered Trademark), and the like).

Examples of the external device connected to the smart phone 200 include a wired/wireless headset, a wired/wireless external charger, a wired/wireless data port, a memory card or a subscriber identity module (SIM) cardIa user identity module (UIM) card which is connected through a card socket, an external audio-video device which is connected through an audio-video input/output (I/O) terminal, an external audio-video device which is subjected to wireless connection, a smart phone which is subjected to wired/wireless connection, a personal computer which is subjected to wired/wireless connection, PDA which is subjected to wired/wireless connection, an earphone which is subjected to wired/wireless connection, and the like. Data transmitted from such an external device through the external input and output unit 260 is transmitted to each internal constituent of the smart phone 200, and internal data of the smart phone 200 may be transmitted to the external device.

The GPS receiving unit 270 receives a GPS signal which is transmitted from GPS satellites ST1 to STn according to an instruction of the main control unit 201, executes positioning calculation processing based on a plurality of received GPS signals, and detects a position formed of the latitude, the longitude, and the altitude of the smart phone 200. In a case where the GPS receiving unit 270 is capable of acquiring position information from the wireless communication unit 210 or the external input and output unit 260 (for example, a wireless LAN), the position may be detected by using the position information.

The motion sensor unit 280, for example, includes a triaxial acceleration sensor and the like, and detects a physical movement of the smart phone 200 according to an instruction of the main control unit 201. By detecting the physical movement of the smart phone 200, a movement direction or an acceleration of the smart phone 200 is detected. The detection result is output to the main control unit 201 from the motion sensor unit 280.

The power unit 290 supplies electric power accumulated in a battery (not illustrated) to each unit of the smart phone 200 according to an instruction of the main control unit 201.

The main control unit 201 includes a micro processor, is operated according to a control program or control data stored in the storage unit 250, collectively controls each unit of the smart phone 200. In addition, the main control unit 201 performs sound communication or data communication through the wireless communication unit 210, and thus, has a mobile communication control function of controlling each unit of a communication system, and an application processing function.

The application processing function is realized by operating the main control unit 201 according to application software stored in the storage unit 250. Examples of the application processing function include an infrared communication function of performing data communication with respect to an opposite device by controlling the external input and output unit 260, an e-mail function of performing transceiving with respect to an e-mail, a Web browsing function of performing browsing with respect to a Web page, and the like.

In addition, main control unit 201 has an image processing function of displaying a video on the display input unit 220 and the like on the basis of image data (data of a static image or a dynamic image) such as received data or downloaded streaming data. The image processing function indicates a function of decoding the image data described above by the main control unit 201, of performing image processing with respect to the decoding result, and of displaying an image on the display input unit 220.

Further, the main control unit 201 executes display control with respect to the display panel 221 and manipulation detection control of detecting the user manipulation through the manipulation unit 240 and the manipulation panel 222.

The main control unit 201 displays a software key such as an icon or a scroll bar for activating application software or displays Windows for creating an e-mail by executing the display control. Furthermore, the scroll bar indicates a software key for receiving an instruction of moving a display portion of an image which is too large to be contained in a display region of the display panel 221 with respect to the image.

In addition, the main control unit 201 detects the user manipulation through the manipulation unit 240, receives manipulation with respect to the icon described above through the manipulation panel 222 and input of a character string with respect to an input section of the above Windows described above, or receives a scroll request of a display image through the scroll bar, by executing the manipulation detection control.

Further, the main control unit 201 has a touch panel control function which determines whether the manipulation position with respect to the manipulation panel 222 is the superimposition portion (the display region) superimposed on the display panel 221 or the outer peripheral portion (the non-display region) other than the superimposition portion, which is not superimposed on the display panel 221, and controls a sensitive region of the manipulation panel 222 or the display position of the software key by executing the manipulation detection control.

In addition, the main control unit 201 detects gesture manipulation with respect to the manipulation panel 222, and is capable of executing a function set in advance according to the detected gesture manipulation. The gesture manipulation does not indicate simple touch manipulation of the related art, but indicates manipulation of drawing a trajectory by a finger or the like, of simultaneously designating a plurality of positions, or of drawing a trajectory with respect to at least one position from a plurality of positions by combining the above-described drawing methods.

The camera unit 241 is a digital camera performing electronic imaging by using an imaging element such as a complementary metal oxide semiconductor (CMOS) or a charge-coupled device (CCD). The imaging device 14 described above is able to be applied to the camera unit 241. In particular, in the configuration of the imaging device 14 (the first optical system 18, the second optical system 20, and the imaging element 26) illustrated in Fig. 11 to Fig. 13 described above, a mechanical switching mechanism or the like is not required, and the wide angle image and the telephoto image may be imaged, and thus, the imaging device 14 is preferable as a camera unit incorporated in a thin portable terminal such as the smart phone 200.

In addition, the camera unit 241 is capable of converting image data obtained by performing imaging, for example, into compressed image data such as joint photographic coding experts group (JPEG), is capable of storing the image data in the storage unit 250, or outputting the image data through the external input and output unit 260 or the wireless communication unit 210 according to the control of the main control unit 201. In the smart phone 200 illustrated in Fig. 14, the camera unit 241 is mounted on the surface identical to the surface on which the display input unit 220 is disposed, but a mounting position of the camera unit 241 is not limited thereto, and the camera unit 241 may be mounted on a back surface of the display input unit 220, or a plurality of camera units 241 may be mounted. Furthermore, in a case where the plurality of camera units 241 are mounted, imaging may be performed by a single camera unit 241 by switching the camera unit 241 used for performing imaging, or imaging may be performed by simultaneously using the plurality of camera units 241.

In addition, the camera unit 241 may be used in various functions of the smart phone 200. For example, it is possible to display an image acquired by the camera unit 241 on the display panel 221, or it is possible to use the image of the camera unit 241 as one of manipulation inputs of the manipulation panel 222. In addition, when the GPS receiving unit 270 detects a position, the position may be detected by referring to the image from the camera unit 241. Further, it is possible to determine an optical axis direction of the camera unit 241 of the smart phone 200 or to determine a current usage environment by referring to the image from the camera unit 241, not by using a triaxial acceleration sensor or by using the triaxial acceleration sensor together. Naturally, the image from the camera unit 241 may be used in application software.

The present invention is not limited to the embodiments described above, and it is obvious that various modifications may be performed in a range not departing from the scope of the present invention as defined in the appended claims.

## Claims

1. An image display system, comprising:
an imaging system which has a first optical system (113) arranged on an optical axis in the center of the imaging system and an annular optical system (114) as a second optical system (20) arranged on the same optical axis,
an imaging element (26) and color filters arranged on a light receiving surface of the imaging element,
the imaging element comprising a micro lens array (116) and an image sensor (118), wherein the image sensor (118) is constituted of a two-dimensionally array of light-receiving cells,
the imaging system being adapted to simultaneously capture a first image (51) of a target image (53) as a wide angle image, and a second image (52) of the target image (53) as a telephoto image;
the image display system further comprising an image display device (10), including:
a display controller (30) adapted to control display of images in a display unit (12)
wherein the display controller (30) is adapted to simultaneously display the first image (51) and the second image on the display unit (12) such that a position of the first image (51) on the display unit (12) is coincident with a position of the second image (52) on the display unit (12), and to set a region in which the first image (51) is displayed to be narrower than a region in which the second image (52) is displayed on the display unit (12),
wherein
the center of the first image (51) is coincident with the center of the second image (52),
wherein the wide angle image and the telephoto image are simultaneously captured as color images using the color filters,
wherein each of the micro lens of the micro lens array (116) forms a first center pupil image corresponding to the center optical system (113) on first receiving cells of the array of light-receiving cells, and forms a second annular pupil image corresponding to the annular optical system (114) on second receiving cells of the array of light-receiving cells different from the first receiving cells,
wherein the wide angle image is generated from the first center pupil image, and the telephoto image is generated from the second annular pupil image.

2. The image display system (10) according to claim 1 or 2,
wherein the display controller (30) is adapted to mixedly display the first image (51) and the second image (52) in at least a part of the region in which the first image is displayed in the display unit (12),
wherein the display controller (30) is adapted to display the first image (52) and the second image on the display unit in a state in which a mixing ratio of the first image (51) is larger than a mixing ratio of the second image (52) in a center portion of an image display region of the display unit (12).

3. The image display system (10) according to any one of claims 1 to 3,
wherein the display controller (30) is adapted to mixedly display the first image (51) and the second image (52) in at least a part of the region in which the first image is displayed in the display unit (12),
wherein the display controller (30) is adapted to display the first image and the second image on the display unit in a state in which the mixing ratio of the first image (31) is smaller than the mixing ratio of the second image (52) or the mixing ratio of the first image (51) is identical to the mixing ratio of the second image in a peripheral portion of the image display region of the display unit (12).

4. The image display system (10) according to claim 3 or 4,
wherein the display controller (30) is adapted to continuously change the mixing ratio of the second image (52) with respect to the first image in a direction towards a peripheral portion from a center of the first image (51) in at least a part of the region in which the first image is displayed in the display unit (12), and
more preferably the display controller (30) is adapted to continuously increase the mixing ratio of the second image (52) with respect to the first image in the direction towards the peripheral portion from the center of the first image in at least a part of the region in which the first image is displayed in the display unit (12).

5. The image display system (10) according to any one of claims 1 to 5,
wherein in the display unit (12), a display field angle of the first image is larger than a display field angle of the second image (52).

6. The image display system (10) according to any one of claims 1 to 6,
wherein the display controller (30) is adapted to determine a size of a display region of the first image in the display unit according to a size of the display target image of the first image and a size of the display target image (53) of the second image (52).

7. The image display system (10) according to any one of claims 1 to 7,
wherein the display controller (30) is adapted to not display the second image (52) in a region in which the first image (51) is displayed in the display unit (12).

8. The image display system (10) according to any one of claims 1 to 8, further comprising:
a target image position acquisition unit (36) adapted to acquire the position of the display target image (53) of the first image (51) and the position of the display target image (53) of the second image (52) by analyzing data indicating the first image (51) and the second image (52),
wherein the display controller (30) is adapted to determine a display size of at least one of the first image (51) or the second image (52) in the display unit (12) on the basis of the position of the display target image (53) of the first image (51) and the position of the display target image (53) of the second image (52) which are acquired by the target image position acquisition unit (36).

9. The image display system (10) according to any one of claims 1 to 9,
wherein the display controller (30) is adapted to stereoscopically display at least one of the first image (51) or the second image (52) in the display unit (12), and allows a depth position of the display target image (53) of the first image (51) to be different from a depth position of the display target image (53) of the second image (52) in the display unit (12).

10. The image display system (10) according to any one of claims 1 to 10, further comprising:
an image synthesis unit (34) adapted to synthese the first image (51) and the second image (52) which are displayed on the display unit (12),
wherein the display controller (30) is adapted to display the first image (51) and the second image (52) which are electronically or optically synthesized by the image synthesis unit on the display unit (12).

11. The image display system (10) according to any one of claims 1 to 11, further comprising:
a blur acquisition unit (38) adapted to acquire a blur amount of at least one of the display target image (53) of the first image (51) or the display target image (53) of the second image (52),
wherein the display controller (30) is adapted to determine a display ratio of at least one of the first image or the second image in the display unit (12) on the basis of the blur amount which is acquired by the blur acquisition unit (38).

12. The image display system (10) according to claim 12,
wherein in a case in which the blur amount acquired by the blur acquisition unit (38) is greater than or equal to a first threshold value, the display controller (30) is adapted to set the display ratio of the first image (51) to be larger than that in a case in which the blur amount acquired by the blur acquisition unit (38) is less than the first threshold value.

13. The image display system (10) according to claim 12 or 13,
wherein in a case in which the blur amount acquired by the blur acquisition unit (38) is less than or equal to a second threshold value, the display controller (30) is adapted to set the display ratio of the second image (52) to be larger than that in a case in which the blur amount acquired by the blur acquisition unit (38) is greater than the second threshold value.

14. The image display system (10) according to any one of claims 12 to 14,
wherein the display ratio is a ratio of a display area to an entire image display region in the display unit (12).

15. The image display system (10) according to any one of claims 12 to 14,
wherein the display controller (30) is adapted to mixedly display the first image and the second image in at least a part of the region in which the first image (51) is displayed in the display unit (12), and
the display ratio is a mixing ratio of display in at least a part of the region in which the first image (51) is displayed in the display unit (12).

16. An image display method of controlling display of images in an image display system according to claims 1 to 15.

## Patentansprüche

1. Bildanzeigesystem , umfassend:
ein Abbildungssystem, das eine erste Optik (113), angeordnet auf einer optischen Achse in der Mitte des Abbildungssystems, und eine ringförmige Optik (114) als zweite Optik (20), angeordnet auf derselben optischen Achse, aufweist,
ein Bildgebungselement (26) und Farbfilter, die auf einer Lichtaufnahmefläche des Bildgebungselements angeordnet sind,
wobei das Bildgebungselement ein Mikrolinsenarray (116) und einen Bildsensor (118) aufweist, wobei letzterer aus einem zweidimensionalen Array von Lichtempfangszellen gebildet ist,
das Abbildungssystem ausgebildet ist zur gleichzeitigen Aufnahme eines ersten Bilds (51) eines Zielbilds (32) als Weitwinkelbild, und eines zweiten Bilds (52) des Zielbilds (53) als Telephotobild;
wobei das Bildanzeigesystem weiterhin eine Bildanzeigeeinrichtung (10) aufweist. welche enthält:
eine Anzeigesteuerung (30), ausgebildet zum Steuern einer Anzeige von Bildern auf einer Anzeigeeinheit (12),
wobei die Anzeigesteuerung (30) ausgebildet ist zum gleichzeitigen Anzeigen des ersten Bilds (51) und des zweiten Bilds auf der Anzeigeeinheit (12) derart, dass eine Position des ersten Bilds (51) auf der Anzeigeeinheit (12) übereinstimmt mit einer Position des zweiten Bilds (52) auf der Anzeigeeinheit (12), und zum Einstellen einer Zone, in welcher das erste Bild (51) schmaler angezeigt wird als in einer Zone, in der das zweite Bild (52) auf der Anzeigeeinheit (12) angezeigt wird,
wobei
die Mitte des ersten Bilds (51) übereinstimmt mit der Mitte des zweiten Bilds (52),
wobei das Weitwinkelbild und das Telephotobild gleichzeitig als Farbbilder mit Hilfe von Farbfiltern aufgenommen werden.
wobei jede Mikrolinse des Mikrolinsenarrays (116) ein erstes Mitten-Pupillenbild entsprechend der zentralen Optik (113) auf ersten Empfangszellen des Arrays von Lichtaufnahmezellen bildet, und ein zweites ringförmiges Pupillenbild entsprechend der ringförmigen Optik (114) auf zweiten Aufnahmezellen des Arrays von Lichtaufnahmezellen verschieden von den ersten Aufnahmezellen bildet,
wobei das Weitwinkelbild aus dem ersten Mittel-Pupillenbild erzeugt wird, und das Telephotobild aus dem zweiten ringförmigen Pupillenbild erzeugt wird.

2. Bildanzeigesystem (10) nach Anspruch 1 oder 2,
bei dem die Anzeigesteuerung (30) ausgebildet ist zum gemischten Anzeigen des ersten Bilds (51) und des zweiten Bilds (52) in zumindest einem Teil der Zone, in welcher das erste Bild auf der Anzeigeeinheit (12) angezeigt wird.
wobei die Anzeigesteuerung (30) ausgebildet ist zum Anzeigen des ersten Bilds (52) und des zweiten Bilds auf der Anzeigeeinheit in einem Zustand, in welchem ein Mischungsverhältnis des ersten Bilds (51) größer ist als ein Mischungsverhältnis des zweiten Bilds (52) in einem Mittelbereich der Bildanzeigezone der Anzeigeeinheit (12).

3. Bildanzeigesystem (10) nach einem der Ansprüche 1 bis 3.
bei dem die Anzeigesteuerung (30) ausgebildet ist zum gemischten Anzeigen des ersten Bilds (51) und des zweiten Bilds (52) in mindestens einem Teil der Zone, in welcher das erste Bild in der Anzeigeeinheit (12) angezeigt wird,
wobei die Anzeigesteuerung (30) ausgebildet ist zum Anzeigen des ersten Bilds und des zweiten Bilds auf der Anzeigeeinheit in einem Zustand, in welchem das Mischungsverhältnis des ersten Bilds (31) kleiner ist als das Mischungsverhältnis des zweiten Bilds (52). oder das Mischungsverhältnis des ersten Bilds (51) identisch ist mit dem Mischungsverhältnis des zweiten Bilds in einem Umfangsabschnitt der Bildanzeigezone der Anzeigeeinheit (12).

4. Bildanzeigesystem (10) nach Anspruch 3 oder 4,
bei dem die Anzeigesteuerung (30) ausgebildet ist zum kontinuierlichen Ändern des Mischungsverhältnisses des zweiten Bilds (52) bezüglich des ersten Bilds in einer Richtung zu einem Umfangsbereich ausgehend von einer Mitte des ersten Bilds (51), zumindest in einem Teil der Zone, in der das erste Bild auf der Anzeigeeinheit (12) angezeigt wird, und
noch bevorzugter, die Anzeigesteuerung (30) ausgebildet ist zum kontinuierlichen Erhöhen des Mischungsverhältnisses des zweiten Bilds (52) bezüglich des ersten Bilds in der Richtung zu dem Umfangsbereich ausgehend von der Mitte des ersten Bilds, in zumindest einem Teil der Zone, in welcher das erste Bild auf der Anzeigeeinheit (12) angezeigt wird.

5. Bildanzeigesystem (10) nach einem der Ansprüche 1 bis 5.
bei dem in der Anzeigeeinheit (12) ein Anzeigefeldwinkel des ersten Bilds größer ist als ein Anzeigefeldwinkel des zweiten Bilds (52).

6. Bildanzeigesystem (10) nach einem der Ansprüche 1 bis 6,
bei dem die Anzeigesteuerung (30) ausgebildet ist zum Bestimmen einer Größe einer Anzeigezone des ersten Bilds in der Anzeigeeinheit nach Maßgabe einer Größe des Anzeigezielbilds des ersten Bilds und einer Größe des Anzeigezielbilds (53) des zweiten Bilds (52).

7. Bildanzeigesystem (10) nach einem der Ansprüche 1 bis 7,
bei dem die Anzeigesteuerung (30) ausgebildet ist, um das zweite Bild (52) innerhalb einer Zone, in der das erste Bild (51) auf der Anzeigeeinheit (12) angezeigt wird, nicht anzuzeigen.

8. Bildanzeigesystem (10) nach einem der Ansprüche 1 bis 8. weiterhin umfassend:
eine Zielbildpositions-Erfassungseinheit (36), ausgebildet zum Erfassen der Position des Anzeigezielbilds (53) des ersten Bilds (51) und der Position des Anzeigezielbilds (53) des zweiten Bilds (52) durch Analysieren von Daten, die das erste Bild (51) und das zweite Bild (52) angeben,
wobei die Anzeigesteuerung (30) ausgebildet ist zum Bestimmen einer Anzeigegröße von zumindest einem von dem ersten Bild (51) und dem zweiten Bild (52) auf der Anzeigeeinheit (12), auf der Grundlage der Position des Anzeigezielbilds (53) des ersten Bilds (51) und der Position des Anzeigezielbilds (53) des zweiten Bilds (52), die von der Anzeigcbildpositions-Erfassungseinheit (36) erfasst werden.

9. Bildanzeigesystem (10) nach einem der Ansprüche 1 bis 9,
bei dem die Anzeigesteuerung (30) ausgebildet ist zum stereoskopen Anzeigen mindestens eines von dem ersten Bild (51) oder dem zweiten Bild (52) auf der Anzeigeeinheit (12), und zum Erlauben, dass ein Tiefenposition des Anzeigezielbilds (53) des ersten Bilds (51) verschieden ist von einer Tiefenposition des Anzeigezielbilds (53) des zweiten Bilds (52) auf der Anzeigeeinheit (12).

10. Bildanzeigesystem (10) nach einem der Ansprüche 1 bis 10, weiterhin umfassend:
eine Bildsyntheseeinheit (34), ausgebildet zum Synthetisieren des ersten Bilds (51) und des zweiten Bilds (52), die auf der Anzeigeeinheit (12) angezeigt werden,
wobei die Anzeigesteuerung (30) ausgebildet ist zum Anzeigen des ersten Bilds (51) und des zweiten Bilds (52), die von der Bildsyntheseeinheit elektronisch oder optisch synthetisiert wurden, auf der Anzeigeeinheit (12).

11. Bildanzeigesystem (10) nach einem der Ansprüche 1 bis 11. weiterhin umfassend:
eine Unschärfeerfassungseinheit (38), ausgebildet zum Erfassen einer Unschärfegröße von mindestens einem des Anzeigezielbilds (53) des ersten Bilds (51) und des Anzeigezielbilds (53) des zweiten Bilds (52),
wobei die Anzeigesteuerung (30) ausgebildet ist zum Bestimmen eines Anzeigeverhältnisses von mindestens einem von dem ersten Bild oder dem zweiten Bild auf der Anzeigeeinheit (12) auf der Grundlage der Unschärfegröße, die von der Unschärfeerfassungseinheit (38) erfasst wurde.

12. Bildanzeigesystem (10) nach Anspruch 12.
bei dem für den Fall, dass die von der Unschärfeerfassungseinheit (38) erfasste Unschärfegröße größer oder gleich einem ersten Schwellenwert ist, die Anzeigesteuerung (30) ausgebildet ist zum Einstellen des Anzeigeverhältnisses des ersten Bilds (3 1) auf einen größeren Wert als dann, wenn die von der Unschärfeerfassungseinheit (31) erfasste Unschärfegröße kleiner ist als der erste Schwellenwert.

13. Bildanzeigesystem (10) nach Anspruch 12 oder 13.
bei dem für den Fall, dass die von der Unschärfeerfassungseinheit (38) erfasste Unschärfegröße gleich oder kleiner ist als ein zweiter Schwellenwert, die Anzeigesteuerung (30) ausgebildet ist zum Einstellen des Anzeigeverhältnisses des zweiten Bilds (32) auf einen größeren Wert als in dem Fall, dass die von der Unschärfeerfassungseinheit (38) erfasste Unschärfegröße größer ist als der zweite Schwellenwert.

14. Bildanzeigesystem (10) nach einem der Ansprüche 12 bis 14.
bei dem das Anzeigeverhältnis ein Verhältnis einer Anzeigefläche zu der gesamten Bildanzeigezone in der Anzeigeeinheit (12) ist.

15. Bildanzeigesystem (10) nach einem der Ansprüche 12 bis 14.
bei dem die Anzeigesteuerung (30) ausgebildet ist zum gemischten Anzeigen des ersten Bilds und des zweiten Bilds in zumindest einem Teil der Zone, in welchem das erste Bild (51) auf der Anzeigeeinheit (12) angezeigt wird, und
das Anzeigeverhältnis ein Mischungsverhältnis einer Anzeige in zumindest einem Teil der Zone ist, in der das erste Bild (51) auf der Anzeigeeinheit (12) angezeigt wird.

16. Bildanzeigeverfahren zum Steuern der Anzeige von Bildern in einem Bildanzeigesystem nach einem der Ansprüche 1 bis 15.

## Revendications

1. Système d'affichage d'image, comprenant :
un système d'imagerie, lequel présente un premier système optique (113) agencé sur un axe optique au centre du système d'imagerie et un système optique annulaire (114) comme second système optique (20) agencé sur le même axe optique ;
un élément d'imagerie (26) et des filtres colorés agencés sur une surface de réception de lumière de l'élément d'imagerie ;
l'élément d'imagerie comprenant un réseau de microlentilles (116) et un capteur d'image (118), dans lequel le capteur d'image (118) est constitué d'un réseau bidimensionnel de cellules de réception de lumière,
le système d'imagerie étant apte à capturer simultanément une première image (51) d'une image cible (53) comme image à grand angle, et une seconde image (52) de l'image cible (53) comme image de téléobjectif ;
le système d'affichage d'image comprenant en outre un dispositif d'affichage d'image (10), incluant :
un contrôleur d'affichage (30) apte à commander l'affichage d'images dans une unité d'affichage (12),
dans lequel le contrôleur d'affichage (30) est apte à afficher simultanément la première image (51) et la seconde image sur l'unité d'affichage (12), de telle sorte qu'une position de la première image (51) sur l'unité d'affichage (12) coïncide avec une position de la seconde image (52) sur l'unité d'affichage (12), et pour régler une région où la première image (51) est affichée pour la rendre plus étroite qu'une région où la seconde image (52) est affichée sur l'unité d'affichage (12),
dans lequel
le centre de la première image (51) coïncide avec le centre de la seconde image (52) ;
dans lequel l'image à grand angle et l'image de téléobjectif sont capturées simultanément comme images couleur à l'aide des filtres colorés ;
dans lequel chaque microlentille du réseau de microlentilles (116) forme une première image de pupille centrale correspondant au système optique central (113) sur des premières cellules de réception du réseau de cellules de réception de lumière, et forme une seconde image de pupille annulaire correspondant au système optique annulaire (114) sur des secondes cellules de réception du réseau de cellules de réception de lumière différentes des premières cellules de réception, et
dans lequel l'image à grand angle est générée à partir de la première image de pupille centrale, et l'image de téléobjectif est générée à partir de la seconde image de pupille annulaire.

2. Système d'affichage d'image (10) selon la revendication 1 ou 2,
dans lequel le contrôleur d'affichage (30) est apte à afficher de manière mixée la première image (51) et la seconde image (52) dans au moins une partie de la région où la première image est affichée dans l'unité d'affichage (12), et
dans lequel le contrôleur d'affichage (30) est apte à afficher la première image (52) et la seconde image sur l'unité d'affichage dans un état où un rapport de mixage de la première image (51) est supérieur à un rapport de mixage de la seconde image (52) dans une portion centrale d'une région d'affichage d'image de l'unité d'affichage (12).

3. Système d'affichage d'image (10) selon l'une quelconque des revendications 1 à 3,
dans lequel le contrôleur d'affichage (30) est apte à afficher de manière mixée la première image (51) et la seconde image (52) dans au moins une partie de la région où la première image est affichée dans l'unité d'affichage (12), et
dans lequel le contrôleur d'affichage (30) est apte à afficher la première image et la seconde image sur l'unité d'affichage dans un état où l'état de mixage de la première image (31) est inférieur au rapport de mixage de la seconde image (52), ou le rapport de mixage de la première image (51) est identique au rapport de mixage de la seconde image dans une portion périphérique de la région d'affichage d'image de l'unité d'affichage (12).

4. Système d'affichage d'image (10) selon la revendication 3 ou 4,
dans lequel le contrôleur d'affichage (30) est apte à modifier de manière continue le rapport de mixage de la seconde image (52) par rapport à la première image dans une direction allant vers une portion périphérique à partir d'un centre de la première image (51) dans au moins une partie de la région où la première image est affichée dans l'unité d'affichage (12), et
plus préférablement, le contrôleur d'affichage (30) est apte à augmenter de manière continue le rapport de mixage de la seconde image (52) par rapport à la première image dans une direction allant vers la portion périphérique à partir du centre de la première image dans au moins une partie de la région où la première image est affichée dans l'unité d'affichage (12).

5. Système d'affichage d'image (10) selon l'une quelconque des revendications 1 à 5,
dans lequel dans l'unité d'affichage (12), un angle de champ d'affichage de la première image est supérieur à un angle de champ d'affichage de la seconde image (52).

6. Système d'affichage d'image (10) selon l'une quelconque des revendications 1 à 6,
dans lequel le contrôleur d'affichage (30) est apte à déterminer une taille d'une région d'affichage de la première image dans l'unité d'affichage conformément à une taille de l'image cible d'affichage de la première image et à une taille de l'image cible d'affichage (53) de la seconde image (52).

7. Système d'affichage d'image (10) selon l'une quelconque des revendications 1 à 7,
dans lequel le contrôleur d'affichage (30) est apte à ne pas afficher la seconde image (52) dans une région où la première image (51) est affichée dans l'unité d'affichage (12).

8. Système d'affichage d'image (10) selon l'une quelconque des revendications 1 à 8, comprenant en outre :
une unité d'acquisition de position d'image cible (36) apte à acquérir la position de l'image cible d'affichage (53) de la première image (51) et la position de l'image cible d'affichage (53) de la seconde image (52) en analysant des données indiquant la première image (51) et la seconde image (52), et
dans lequel le contrôleur d'affichage (30) est apte à déterminer une taille d'affichage d'au moins une image parmi la première image (51) ou la seconde image (52) dans l'unité d'affichage (12) sur la base de la position de l'image cible d'affichage (53) de la première image (51) et de la position de l'image cible d'affichage (53) de la seconde image (52), lesquelles sont acquises par l'unité d'acquisition de position d'image cible (36).

9. Système d'affichage d'image (10) selon l'une quelconque des revendications 1 à 9,
dans lequel le contrôleur d'affichage (30) est apte à afficher de manière stéréoscopique au moins une image parmi la première image (51) ou la seconde image (52) dans l'unité d'affichage (12), et permet à une position de profondeur de l'image cible d'affichage (53) de la première image (51) d'être différente d'une position de profondeur de l'image cible d'affichage (53) de la seconde image (52) dans l'unité d'affichage (12).

10. Système d'affichage d'image (10) selon l'une quelconque des revendications 1 à 10, comprenant en outre :
une unité de synthèse d'image (34) apte à synthétiser la première image (51) et la seconde image (52), lesquelles sont affichées dans l'unité d'affichage (12),
dans lequel le contrôleur d'affichage (30) est apte à afficher la première image (51) et la seconde image (52), lesquelles sont synthétisées par voie électronique ou optique par l'unité de synthèse d'image sur l'unité d'affichage (12).

11. Système d'affichage d'image (10) selon l'une quelconque des revendications 1 à 11, comprenant en outre :
une unité d'acquisition flou (38) apte à acquérir une quantité de flou d'au moins une image parmi l'image cible d'affichage (53) de la première image (51) ou l'image cible d'affichage (53) de la seconde image (52), et
dans lequel le contrôleur d'affichage (30) est apte à déterminer un rapport d'affichage d'au moins une image parmi la première image ou la seconde image dans l'unité d'affichage (12) sur la base de la quantité de flou, laquelle est acquise par l'unité d'acquisition de flou (38).

12. Système d'affichage d'image (10) selon la revendication 12,
dans lequel dans un cas où la quantité de flou acquise par l'unité d'acquisition de flou (38) est supérieure ou égale à une première valeur seuil, le contrôleur d'affichage (30) est apte à régler le rapport d'affichage de la première image (51) pour le rendre supérieur à un cas où la quantité de flou acquise par l'unité d'acquisition de flou (38) est inférieure à la première valeur de seuil.

13. Système d'affichage d'image (10) selon la revendication 12 ou 13,
dans lequel dans un cas où la quantité de flou acquise par l'unité d'acquisition de flou (38) est inférieure ou égale à une seconde valeur seuil, le contrôleur d'affichage (30) est apte à régler le rapport d'affichage de la seconde image (52) pour le rendre supérieur à un cas où la quantité de flou acquise par l'unité d'acquisition de flou (38) est supérieure à la seconde valeur de seuil.

14. Système d'affichage d'image (10) selon l'une quelconque des revendications 12 à 14,
dans lequel le rapport d'affichage est un rapport entre une zone d'affichage et une région d'affichage d'image entière dans l'unité d'affichage (12).

15. Système d'affichage d'image (10) selon l'une quelconque des revendications 12 à 14,
dans lequel le contrôleur d'affichage (30) est apte à afficher de manière mixée la première image et la seconde image dans au moins une partie de la région où la première image (51) est affichée dans l'unité d'affichage (12), et
le rapport d'affichage est un rapport de mixage de l'affichage dans au moins une partie de la région où la première image (51) est affichée dans l'unité d'affichage (12).

16. Procédé d'affichage d'image pour commander l'affichage d'images dans un système d'affichage d'image selon l'une quelconque des revendications 1 à 15.
